# EUROPEAN PATENT APPLICATION

(11) **EP 2 439 994 A1**
(43) Date of publication of application: **11.04.2012**
(21) Application number: 10783135.6
(22) Date of filing: 01.06.2010
(51) Int. Cl.: H04W 72/04, H04W 56/00, H04W 72/08

(54) **WIRELESS COMMUNICATION SYSTEM, WIRELESS COMMUNICATION METHOD, BASE STATION APPARATUS, AND TERMINAL STATION APPARATUS**

(30) Priority: 02.06.2009 JP 2009133255
(71) Applicant: Sharp Kabushiki Kaisha, Osaka-shi, Osaka 545-8522 (JP)
(72) Inventor: KONNO, Yoshio, Osaja 545-8522 (JP); ISHIKURA, Katsutoshi, Osaja 545-8522 (JP); KAMENO, Toshiaki, Osaja 545-8522 (JP); TSUNEKAWA, Koichi, Osaja 545-8522 (JP)
(74) Representative: Müller - Hoffmann & Partner
(86) International application number: PCT/JP2010/003659
(87) International publication number: WO 2010/140347

(57) **Abstract**

A wireless communication system includes a terminal station apparatus and a base station apparatus which transmits data to the terminal station apparatus using a plurality of component carriers that are communication frequency bands in which wireless communication is performed. The base station apparatus includes: a frequency band determination unit which determines component carriers in which data is transmitted and notifies the terminal station apparatus of the determined component carriers on the basis of radio quality of each of the plurality of component carriers when transmission of the data to the terminal station apparatus is initiated or when the component carriers to be used for transmission of the data to the terminal station apparatus are changed.

## Description

### TECHNICAL FIELD

The present invention relates to a wireless communication system, a wireless communication method, a base station apparatus, and a terminal station apparatus.
This present application is based upon and claims the benefit of priority from Japanese Patent Application No. 2009-133255, filed June 2, 2009, the entire contents of which are incorporated herein by reference.

### BACKGROUND ART

In 3rd Generation Partnership Project (3GPP), Long Term Evolution-Advanced (LTE-A) has been studied as the next communication type of the current LTE. In LTE-A, it is necessary to implement higher-speed communication than in LTE and support a wider band (a band of up to 100 MHz, exceeding the band of 20 MHz of LTE) than in LTE.

However, it is difficult to globally secure a frequency domain in which a wide band is continuous for LTE-A. For the purpose of maintaining compatibility with LTE to as much as possible, carrier aggregation (CA) for securing a maximum bandwidth of 100 MHz and implementing high-speed and large-capacity communication by performing communication in the integration of a plurality of carriers having a bandwidth of up to 20 MHz has been proposed and agreed upon in the meeting of 3GPP radio access network (RAN) 1# 53b. In CA, a carrier of up to 20 MHz is referred to as a component career (CC). Detailed specifications such as signaling, channel arrangement, mapping, and the like in CA are scheduled to be established.

Downlink (DL) control channel arrangement is largely divided into a method of arranging a control channel (a physical control format indicator channel (PCFICH), a physical hybrid automatic repeat request indicator channel (PHICH), or a physical DL control channel (PDCCH)) on which CC control information is allocated to each CC (hereinafter referred to as "control channel arrangement 1"), and a method of collectively arranging all other CC control information (also referred to as control information) on a control channel of one or more (some) CCs (hereinafter referred to as "control channel arrangement 2"). In the case of control channel arrangement 2, it is necessary to construct a new DL control information (DCI) format by giving up some degree of compatibility with the LTE.

A terminal station apparatus needs to simultaneously monitor and receive all CCs to be used for CA (for its terminal apparatus) notified from a base station apparatus when any control channel arrangement method is adopted.
For example, in the case of control channel arrangement 1, there is a pair corresponding to control information and data information for each CC, and all CCs to be used for CA notified from the base station apparatus should be received simultaneously if there is no particular instruction from the base station apparatus. However, it is possible to reduce the number of CCs in a receivable state by putting some limitations on CCs to be used by the terminal apparatus.

In addition, in the case of control channel arrangement 2, for example, when only CCs in which control information is transmitted are received, it may not be possible to acquire data information in a subframe if the data information is arranged on CCs other than the CCs in which the control information is transmitted. Thus, in control channel arrangement 2, all CCs to be used for CA to be notified from the base station apparatus should also be received.

Because it is necessary to operate a radio frequency (RF) front-end unit of the terminal station apparatus in correspondence with its CC band when all CCs to be used for CA notified from the base station apparatus are simultaneously received, power consumption of the terminal station apparatus is increased. In particular, unnecessary power consumption is significant when a communication data amount is small or when no data reception is performed.
In control channel arrangement 2, an effect of reducing a feedback amount of ACK/NACK is expected in hybrid automatic repeat request (HARQ).

Although the above has been described as a discussion during data communication (a connected state), it is not preferable that all CCs be in the receivable state during standby (an idle state) in terms of power consumption. Thus, a terminal station apparatus that monitors only one or some CCs in the receivable state during standby has been proposed. This CC is referred to as an anchor carrier. However, the definition of the anchor carrier is not obvious at present, and the definition of the anchor carrier during communication as well as during standby is being studied.

As described above, it is preferable to reduce power consumption by monitoring only one (or some) CC(s) in a standby state or a state in which an amount of communication data is absent or particularly small in a communication state.
In order to reduce power consumption, studies on technology in which only one (or some) CC(s) is monitored in the standby state or the state in which the amount of communication data is absent or particularly small in the communication state, and a notification of CCs to be aggregated from the base station apparatus to the terminal station apparatus is generated and then the transition to aggregation communication is made when at least a predetermined amount of communication data is generated in the communication state have begun.

In Non-Patent Document 1, technology for considering the effect of suppressing the power consumption and generating a notification of CCs to be aggregated by a semi-dynamic triggering PDCCH has been proposed. The semi-dynamic triggering PDCCH includes a set of active CCs, which are CCs that are effective after k subframes from a subframe in which the semi-dynamic triggering PDCCH is transmitted, a valid period of the active CCs, and a control channel element (CCE) aggregation level of the active CCs. It is preferable that an LTE-A terminal station apparatus receive the semi-dynamic triggering PDCCH and monitor an activated CC set until the valid period ends, thereby suppressing power consumption.

In Non-Patent Document 2, the definition of an active CC for each terminal station apparatus has been introduced in addition to the definition of an anchor CC. A CC in which control information such as DL scheduling information is transmitted during communication is set as an anchor CC, and an active CC is defined as a CC maintained in the receivable state. The purpose is to make a delay-free transition from the communication state of the anchor CC to aggregation communication using a plurality of CCs by introducing the anchor CC and the active CC. The active CC is semi-statically signaled from a high layer or notified by a particular PDCCH.
Specifically, a current data amount is estimated from previously communicated data, an active CC directed to aggregation communication is determined on the basis of the estimated current data amount, and the determined CC is provided in a communicable state (active state).

Non-Patent Document 3 also shows that communication by one CC is preferable if possible because power consumption is increased when communication is performed in a plurality of CCs.

### Prior Art Documents

### Non-Patent Document

Non-Patent Document 1: 3GPP Contribution, R1-084443, "Issues on Carrier Aggregation for Advanced E-UTRA," Texas Instruments
Non-Patent Document 2: 3GPP Contribution, R1-091503, "Anchor component carrier and preferred control signal structure," Fujitsu
Non-Patent Document 3: 3GPP Contribution, R1-084405, "Spectrum Aggregation Operations-UE Impact Considerations," Motorola

### DISCLOSURE OF INVENTION

### Problem to be Solved by the Invention

In CA as described above, the power consumption of the terminal station apparatus is increased because it is necessary to simultaneously monitor CCs to be used for CA (for its terminal apparatus) notified from the base station apparatus and operate an RF front-end unit in correspondence with its CC band in CA.

If only an anchor carrier (only one or some CCs) can be monitored without monitoring all CCs in order to reduce the power consumption, a CC to be used for CA communication is selected by the base station apparatus, the terminal station apparatus, or both thereof when CA communication by a plurality of CCs from a standby state is initiated or when a CC to be used for communication is changed as in a transition from a communication state of one CC (or a small number of CCs) to CA communication of a plurality of CCs, a larger number of CCs, or CCs other than a currently used CC. However, at this time, neither the terminal station apparatus nor the base station apparatus recognizes radio quality (reception quality) of a CC other than the anchor carrier. Thus, there is a problem in that a CC having poor radio quality is selected as a CC to be used for the aggregation communication and communication efficiency for a bandwidth in use is degraded when CA communication is initiated.

Non-Patent Document 1 also discloses no method of determining an active CC, and there is also a possibility that a CC having poor radio quality will be used for aggregation communication.
Like Non-Patent Document 1, Non-Patent Document 2 also discloses no method of determining an active CC, or of acquiring synchronization with a CC other than an anchor carrier. Thus, there is a possibility that a CC having poor radio quality will be used for CA communication.

The present invention has been made in view of the above-described circumstances, and an object of the invention is to provide a wireless communication system, a wireless communication method, a base station apparatus, and a terminal station apparatus capable of suppressing an increase in power consumption and simultaneously suppressing the degradation of communication efficiency when a carrier to be used for communication is changed, even when CA for performing communication by combining a plurality of carriers is applied.

### Means for Solving the Problem

(1) A first aspect of the present invention is a wireless communication system including a terminal station apparatus and a base station apparatus which transmits data to the terminal station apparatus using a plurality of component carriers that are communication frequency bands in which wireless communication is performed, wherein the base station apparatus includes: a frequency band determination unit which determines component carriers in which data is transmitted and notifies the terminal station apparatus of the determined component carriers on the basis of radio quality of each of the plurality of component carriers when transmission of the data to the terminal station apparatus is initiated or when the component carriers to be used for transmission of the data to the terminal station apparatus are changed; and a transmission unit which transmits the data using the component carriers determined by the frequency band determination unit, and wherein the terminal station apparatus includes: a reception unit which acquires the data transmitted by the transmission unit of the base station apparatus by receiving signals of the component carriers notified by the frequency band determination unit of the base station apparatus.

(2) In the first aspect of the present invention, the base station apparatus may include a quality measurement instruction unit which instructs the terminal station apparatus to measure radio qualities of the plurality of component carriers when transmission of the data to the terminal station apparatus is initiated or when the component carriers to be used for transmission of the data to the terminal station apparatus are changed, the terminal station apparatus may include a quality measurement unit which measures the radio qualities of the plurality of component carriers for which an instruction has been generated by the quality measurement instruction unit and transmits the radio qualities to the base station apparatus, and the frequency band determination unit may determine the component carriers in which the data is transmitted on the basis of the radio quality of each of the plurality of component carriers reported from the terminal station apparatus as a response to the instruction by the quality measurement instruction unit.

(3) In the first aspect of the present invention, the frequency band determination unit may determine the component carriers in which the data is transmitted on the basis of requirement conditions related to the transmission of the data in addition to the radio quality.

(4) In the first aspect of the present invention, the requirement conditions related to the transmission of the data may include an amount of the data and service quality of the data.

(5) In the first aspect of the present invention, the quality measurement unit may acquire synchronization with a signal from the base station apparatus when the radio quality is measured.

(6) In the first aspect of the present invention, the quality measurement unit of the terminal station apparatus periodically may measure radio quality of an anchor carrier, which is one of the component carriers, and the transmission unit may initiate the transmission of the data using only the anchor carrier before the radio quality of each of the component carriers is acquired as a response to the instruction by the quality measurement instruction unit when the transmission of the data to the terminal station apparatus is initiated.

(7) In the first aspect of the present invention, the quality measurement instruction unit may determine whether or not a plurality of component carriers for the transmission of the data are used on the basis of the requirement conditions related to the transmission of the data, and does not instruct the terminal station apparatus to measure the radio quality when the plurality of component carriers are determined not to be used, and the transmission unit may transmit the data using the anchor carrier when the quality measurement instruction unit determines that the plurality of component carriers for the transmission of the data are not used.

(8) In the first aspect of the present invention, the frequency band determination unit may notify the terminal station apparatus of component carriers when some component carriers for which a radio quality measurement instruction has been made by the quality measurement instruction unit are determined as component carriers in which the data is transmitted, the reception unit of the terminal station apparatus may perform reception in only the notified component carriers, and the frequency band determination unit may notify of a component carrier serving as the anchor carrier along with a component carrier notification to the terminal station apparatus when one of the plurality of component carriers is selected and set as the anchor carrier on the basis of the radio quality reported from the terminal station apparatus and the component carrier serving as the anchor carrier by the selection is changed.

(9) In the first aspect of the present invention, the frequency band determination unit may notify the terminal station apparatus of the component carriers when the quality measurement instruction unit determines some component carriers for which a radio quality measurement instruction has been made as the component carriers in which the data is transmitted, and the reception unit of the terminal station apparatus may perform reception in only the notified component carriers.

(10) A second aspect of the present invention is a wireless communication method for use in a wireless communication system including a terminal station apparatus and a base station apparatus which transmits data to the terminal station apparatus using a plurality of component carriers that are communication frequency bands in which wireless communication is performed, the method including: determining, by the base station apparatus, component carriers in which data is transmitted and notifying the terminal station apparatus of the determined component carriers on the basis of radio quality of each of the plurality of component carriers when transmission of the data to the terminal station apparatus is initiated or when the component carriers to be used for transmission of the data to the terminal station apparatus are changed; transmitting, by the base station apparatus, the data using the determined component carriers; and acquiring, by the terminal station apparatus, the transmitted data by receiving signals of the notified component carriers.

(11) A third aspect of the present invention is a base station apparatus which transmits data to a terminal station apparatus using a plurality of component carriers that are communication frequency bands in which wireless communication is performed, the base station apparatus including: a frequency band determination unit which determines component carriers in which data is transmitted and notifies the terminal station apparatus of the determined component carriers on the basis of radio quality of each of the plurality of component carriers when transmission of the data to the terminal station apparatus is initiated or when the component carriers to be used for transmission of the data to the terminal station apparatus are changed; and a transmission unit which transmits the data using the component carriers determined by the frequency band determination unit.

(12) A fourth aspect of the present invention is a terminal station apparatus which receives data transmitted by a base station apparatus using a plurality of component carriers that are continuous frequency bands, the terminal station apparatus including: a reception unit which receives data transmitted by the base station apparatus by receiving signals of component carriers determined on the basis of radio quality of each of the plurality of component carriers when transmission of the data to the terminal station apparatus is initiated or when the component carriers to be used for transmission of the data to the terminal station apparatus are changed.

### Effects of the Invention

According to the present invention, it is possible to suppress an increase in power consumption and simultaneously suppress the degradation of communication efficiency when a carrier to be used for communication is changed, even when CA for performing communication by combining a plurality of carriers is applied.

### BRIEF DESCRIPTION OF THE DRAWINGS

FIG. 1 is a conceptual diagram showing an outline configuration of a wireless communication system according to an embodiment of the present invention.
FIG. 2 is a schematic block diagram showing configurations of a terminal station apparatus 10 and a base station apparatus 20 according to the same embodiment.
FIG. 3 is a schematic block diagram showing a configuration of a control unit 25 of the base station apparatus 20 according to the same embodiment.
FIG. 4 is a schematic block diagram showing a configuration of a control unit 15 of the terminal station apparatus 10 according to the same embodiment.
FIG. 5 is a sequence diagram showing an operation sequence example A between the terminal station apparatus 10 and the base station apparatus 20 according to the same embodiment.
FIG. 6 is a diagram showing an image of CCs to be used in the operation sequence example A according to the same embodiment.
FIG. 7 is a sequence diagram showing an operation sequence example B between the terminal station apparatus 10 and the base station apparatus 20 according to the same embodiment.
FIG. 8 is a diagram showing an image of CCs to be used in the operation sequence example B according to the same embodiment.
FIG. 9 is a sequence diagram showing an operation sequence example C between the terminal station apparatus 10 and the base station apparatus 20 according to the same embodiment.
FIG. 10 is a diagram showing an image of CCs to be used in the operation sequence example C according to the same embodiment.
FIG. 11 is a sequence diagram showing an operation sequence example D between the terminal station apparatus 10 and the base station apparatus 20 according to the same embodiment.
FIG. 12 is a diagram showing an image of CCs to be used in the operation sequence example D according to the same embodiment.
FIG. 13 is a sequence diagram showing an operation sequence example E between the terminal station apparatus 10 and the base station apparatus 20 according to the same embodiment.
FIG. 14 is a diagram showing an image of CCs to be used in the operation sequence example E according to the same embodiment.
FIG. 15 is a sequence diagram showing an operation sequence example F between the terminal station apparatus 10 and the base station apparatus 20 according to the same embodiment.
FIG. 16 is a diagram showing an image of CCs to be used in the operation sequence example F according to the same embodiment.
FIG. 17 is a sequence diagram showing an operation sequence example G between the terminal station apparatus 10 and the base station apparatus 20 according to the same embodiment.
FIG. 18 is a diagram showing an image of CCs to be used in the operation sequence example G according to the same embodiment.
FIG. 19 is a sequence diagram showing an operation sequence example H between the terminal station apparatus 10 and the base station apparatus 20 according to the same embodiment.
FIG. 20 is a diagram showing an image of CCs to be used in the operation sequence example H according to the same embodiment.

### BEST MODE FOR CARRYING OUT THE INVENTION

### <System Concept>

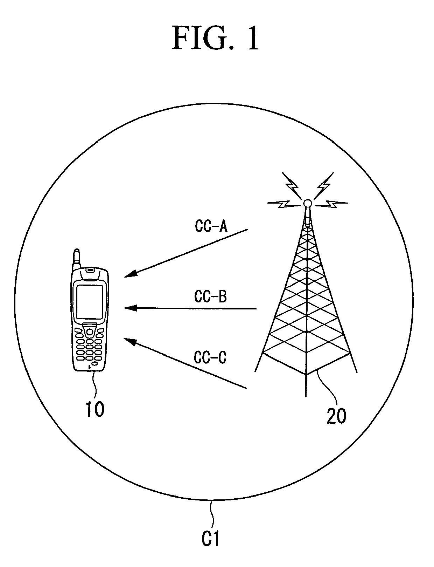

Hereinafter, embodiments of the present invention will be described with reference to the drawings. FIG. 1 is a conceptual diagram showing an outline configuration of a wireless communication system according to an embodiment of the present invention. Here, CA communication between a base station apparatus 20 and a terminal station apparatus 10 is performed using a plurality of CCs that are communication frequency bands being continuous in which wireless communication is performed. In FIG. 1, uplink (UL) communication from the terminal station apparatus 10 to the base station apparatus 20 is omitted and only a concept of DL communication is illustrated. CC-A, CC-B, and CC-C, which are three continuous frequency bands and each have a bandwidth equal to or less than 20 MHz, are transmitted from the base station apparatus 20. The terminal station apparatus implements large-capacity DL communication at a high speed by receiving and demodulating all signals of CC-A, CC-B, and CC-C. Although the number of CCs is 3 in this embodiment, two CCs or a plurality of CCs of which the number is greater than 3, are applicable to the present invention. In addition, all CC signals need not be transmitted from one base station apparatus, but a configuration may be made so that a plurality of base station apparatuses transmit different CC signals and a terminal station apparatus simultaneously receives the CC signals.

### <Configuration of Terminal Station Apparatus/Base Station Apparatus>

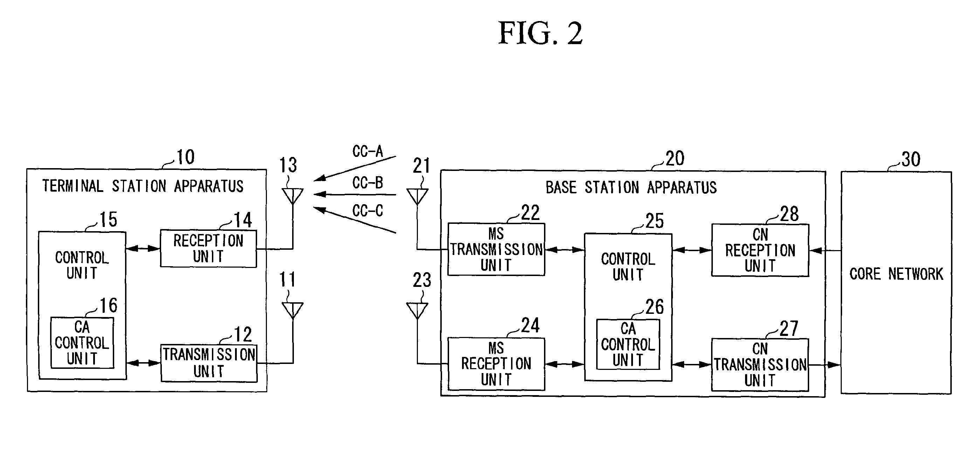

FIG. 2 is a schematic block diagram showing configurations of the terminal station apparatus 10 and the base station apparatus 20. The terminal station apparatus 10 includes a transmission antenna unit 11, a transmission unit 12, a reception antenna 13, a reception unit 14, and a control unit 15. The control unit 15 includes a CA control unit 16. The transmission antenna unit 11 transmits an orthogonal frequency division multiplexing (OFDM) signal of an RF band generated by the transmission unit 12. The transmission unit 12 performs a process of generating a transmission signal (OFDM signal) of the terminal station apparatus 10 for transmission data (UL user data and UL control information) input from the control unit 15. Although an example in which the terminal station apparatus 10 generates and transmits an OFDM signal in uplink communication has been described in this embodiment, a signal may be generated and transmitted in another multicarrier communication type or a single-carrier communication type.

The reception antenna unit 13 receives an OFDM signal of an RF band transmitted by the base station apparatus 20. The reception unit 14 performs a process related to reception in the terminal station apparatus 10 such as demodulation, decoding, or the like for an OFDM signal received by the reception antenna unit 13, and outputs received data (DL user data and DL control information) obtained by a result of the process to the control unit 15. That is, the reception unit 14 receives data transmitted by the base station apparatus 20.

The control unit 15 performs various control operations of the terminal station apparatus 10. The CA control unit 16 performs a control operation related to CA. The CA control unit 16 of the terminal station apparatus 10 acquires CA instruction information notified by the base station apparatus 20 from the reception unit 14, and performs the control of CA communication based on the instruction information, the measurement of radio quality of a CC, or the like.

The base station apparatus 20 includes a transmission antenna unit 21, a mobile station (MS) transmission unit 22, a reception antenna unit 23, an MS reception unit 24, a control unit 25, a CA control unit 26, a core network (CN) transmission unit 27, and a CN reception unit 28. The transmission antenna unit 21 transmits an OFDM signal of an RF band generated by the MS transmission unit 22. The MS transmission unit 22 performs a process related to the generation of a transmission signal (OFDM signal) of the base station apparatus 20 to the terminal station apparatus 10 for transmission data (DL user data and DL control information) input from the control unit 25. At this time, the MS transmission unit 22 arranges the transmission signal in a CC indicated from the control unit 25. The reception antenna unit 23 receives an OFDM signal of an RF band transmitted by the terminal station apparatus 10. The MS reception unit 24 performs a process related to reception in the base station apparatus 20 such as demodulation, decoding, or the like for the OFDM signal received by the reception antenna unit 23, and outputs received data (UL user data and UL control information) obtained as a result of the process to the control unit 25.

The CN transmission unit 27 performs a process of the base station apparatus 20 related to the generation of a signal to be transmitted to the CN 30. The CN reception unit 28 performs a process of the base station apparatus 20 related to a signal received from the CN 30. The control unit 25 performs various control operations of the base station apparatus 20. The CA control unit 26 controls CA. That is, the CA control unit 26 determines the presence/absence of CA communication or a CC to be used for CA from a communication data amount, quality of service (QoS), radio quality, and the like, and further controls CA communication. Both of the CN reception unit 28 and the CN reception unit 27 are connected to the CN 30.

In FIG. 2, a state in which CC-A, CC-B, and CC-C are simultaneously transmitted from the transmission antenna unit 21 of the base station apparatus 20 to the terminal station apparatus 10 is shown. Although the state in which the three CCs are transmitted from one antenna unit 21 is shown in the drawing, for example, the transmission antenna unit 21 may include three antennas, and one CC may be transmitted from one antenna. At this time, the MS transmission unit 22 may also have three processing units, and each processing unit may generate a signal of one CC. In addition, a plurality of antennas for transmitting signals of a plurality of CCs may correspond to CCs necessary for CA.

### <Control unit 25 (Base Station Apparatus 20)>

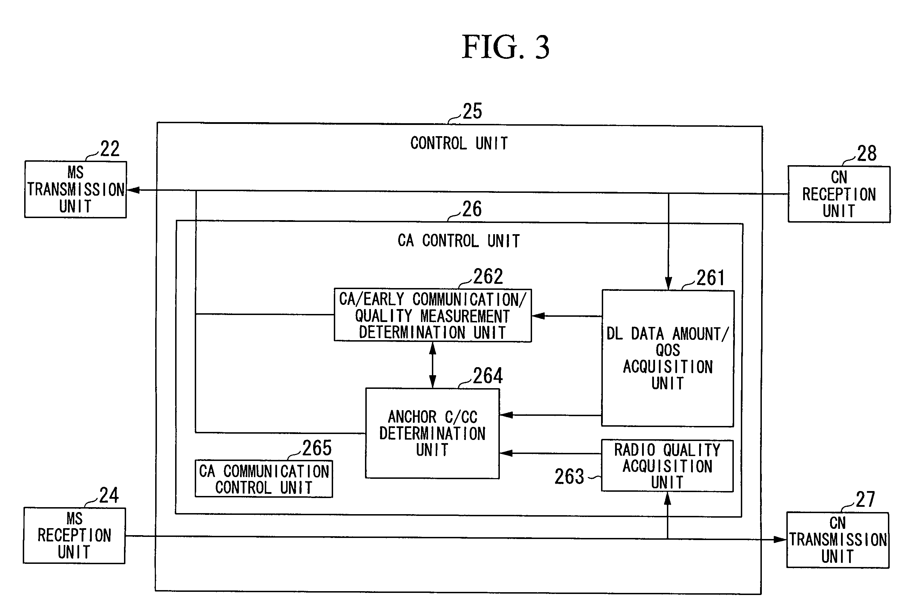

FIG. 3 is a schematic block diagram showing a configuration of the control unit 25 of the base station apparatus 20. The control unit 25 of the base station apparatus 20 includes the CA control unit 26. Further, the CA control unit 26 includes a DL data amount/QoS acquisition unit 261, a CA/early communication/quality measurement determination unit 262, a radio quality acquisition unit 263, an anchor carrier (C)/CC determination unit 264, and a CA communication control unit 265. The DL data amount/QoS acquisition unit 261 acquires QoS when DL user data and a DL data amount, which is a data amount of DL control information and transmission data to be transmitted to the terminal station apparatus 10, from DL user data and DL control information received by the CN reception unit 28 from the CN 30 are transmitted. Here, the QoS also includes bearer information required for a voice service, a packet service, a television (TV)-telephone service, and the like.

The CA/early communication/quality measurement determination unit 262 (also referred to as a quality measurement instruction unit) determines whether or not to execute CA, whether or not to execute early communication, and whether or not to cause the terminal station apparatus 10 to measure radio quality (received power, a signal to noise ratio (SNR), a signal to interference noise ratio (SINR), or the like) of each CC on the basis of the DL data amount and the QoS output from the DL data amount/QoS acquisition unit 261. Here, the early communication indicates that communication is performed early using a carrier (anchor carrier) of which current radio quality is monitored by the terminal station apparatus 10 before CA is performed or before a CC quality measurement is performed. Although an example in which the CA/early communication/quality measurement determination unit 262 determines execution/non-execution of the early communication has been described in this embodiment, the early communication may or may not be constantly executed without determining the execution/non-execution of the early communication.

For example, it is not necessary to perform aggregation when there is no problem in radio quality of a currently used anchor carrier and only the anchor carrier is enough for communication such as when a DL data amount is small or a voice service or the like is used. Thus, the CA/early communication/quality measurement determination unit 262 calculates a necessary effective communication band, for example, on the basis of a DL data amount and QoS, and determines the execution/non-execution of CA on the basis of whether or not an anchor carrier bandwidth and an effective communication band estimated from its radio quality satisfy the necessary corresponding effective communication band. When the estimated effective communication band satisfies the necessary effective communication band and a result of the determination indicates the non-execution, a measurement of radio quality of another CC is determined to be unnecessary.

In addition, there is a determination based on QoS as a method of determining the execution/non-execution of early communication by the CA/early communication/quality measurement determination unit 262. For example, a bearer to be used for transmission of transmission data is set as a determination criterion, and it is determined that the early communication is performed when there is a voice communication bearer. Because whether a delay time is equal to or less than a predetermined value is included as QoS required for the bearer in the case of the voice communication bearer, it is possible to shorten a time (delay time) until communication is rapidly initiated by executing the early communication.
In addition, the CA/early communication/quality measurement determination unit 262 may measure a size of transmission data and determine the size of transmission data by comparing it with a preset threshold. For example, the early communication may not be executed in the case of reception of a large volume of data greater than the threshold, and the early communication may be executed in the case of reception of a small volume of data.

In addition, as a method of determining the execution/non-execution of a quality measurement request by the CA/early communication/quality measurement determination unit 262, for example, because radio quality of at least an anchor carrier is exchanged between the base station apparatus 20 and the terminal apparatus 10 when communication by only the anchor carrier is considered, the CC quality measurement is determined not to be executed when radio quality corresponding to an amount of transmission data is satisfied if the radio quality is so good that aggregation communication is unnecessary, and the CC quality measurement is executed when the radio quality is unsatisfied.
If the CA/early communication/quality measurement determination unit 262 determines that communication by one component is possible, i.e., CA is not performed, during voice communication or when a data amount is small without relation to radio quality of an anchor carrier, a quality measurement request may be determined not to be executed because communication by other CCs is unnecessary.

The CA/early communication/quality measurement determination unit 262 outputs the early communication request (execution/non-execution) and the quality measurement request (execution/non-execution) based on determination results of the execution/non-execution of the above-described early communication request and the execution/non-execution of CA. Here, CCs of which radio qualities are measured may be all CCs available in a function provided in the terminal station apparatus 10 notified from the terminal station apparatus 10 during a communication connection or the like, CCs used for previous communication, or CCs determined by the CA/early communication/quality measurement determination unit 262 on the basis of a use state of CCs or the like. In addition, the CCs of which radio qualities are measured may be set uniquely for each terminal station apparatus 10, or may be unique to each base station apparatus 20.

The CA instruction information, that is, information of an early communication instruction (an instruction of execution or non-execution of early communication) and a quality measurement instruction (an instruction of execution or non-execution of a radio quality measurement) is notified as determination results to the terminal station apparatus 10, for example, using an anchor carrier, via the MS transmission unit 22 and the transmission antenna unit 21. That is, when transmission of data directed to the terminal station apparatus 10 is initiated, the CA/early communication/quality measurement determination unit 262 instructs the terminal station apparatus 10 to measure radio quality of a CC and perform early communication.
The radio quality acquisition unit 263 acquires the radio quality of each CC from UL control information, and notifies the anchor C/CC determination unit 264 of the radio quality. The MS reception unit 24 receives the UL control information from the terminal station apparatus 10 along with UL user data.

The anchor C/CC determination unit 264 (also referred to as a frequency band determination unit) determines whether or not to change an anchor carrier on the basis of a requirement condition related to transmission of DL user data in addition to radio quality of each CC notified from the radio quality acquisition unit 263. Here, the requirement condition related to the transmission of the DL user data may be the DL data amount notified from the DL data amount/QoS acquisition unit 261 or the similarly notified QoS. In addition, when a result of the determination by the CA/early communication/quality measurement determination unit 262 indicates that CA is executed, the anchor C/CC determination unit 264 determines CCs to be used for CA on the basis of the above-described radio quality, DL data amount, and QoS. That is, as a response to a radio quality measurement instruction by the CA/early communication/quality measurement determination unit 262, the anchor C/CC determination unit 264 determines CCs in which data such as the DL user data, the DL control information, or the like is transmitted on the basis of the radio quality of each CC reported from the terminal station apparatus 10. The MS transmission unit 22 (also referred to as a transmission unit) transmits data using the CCs determined by the anchor C/CC determination unit 264.

For example, if there is a problem such as that radio quality of a currently used anchor carrier is less than a predetermined value and radio quality of another CC is good, the anchor C/CC determination unit 264 changes the anchor carrier to an anchor carrier having good radio quality. In addition, the anchor C/CC determination unit 264 determines the number of CCs according to the DL data amount/QoS, and selects CCs having good radio quality.

The anchor C/CC determination unit 264 exchanges control information with the CA/early communication/quality measurement determination unit 262. For example, information of the execution/non-execution of CA is notified from the CA/early communication/quality measurement determination unit 262. Although the determination of the execution/non-execution of CA is made by the CA/early communication/quality measurement determination unit 262 here, the determination may be made by the anchor C/CC determination unit 264 or by both the CA/early communication/quality measurement determination unit 262 and the anchor C/CC determination unit 264. In addition, a CA determination unit that determines the execution/non-execution of CA may be separately installed.

In addition, although an example in which the anchor carrier change is made on the basis of radio quality has been described in this embodiment, the anchor carrier may be a predetermined CC. In this case, the anchor C/CC determination unit 264 may have only a function of determining CCs to be aggregated and may not determine the anchor carrier.
The CA communication control unit 265 controls the DL data amount/QoS acquisition unit 261, the CA/early communication/quality measurement determination unit 262, the radio quality acquisition unit 263, the anchor C/CC determination unit 264, the MS transmission unit 22, and the MS reception unit 24, and controls the CA communication.

### <Control Unit 15 (Terminal Station Apparatus 10)>

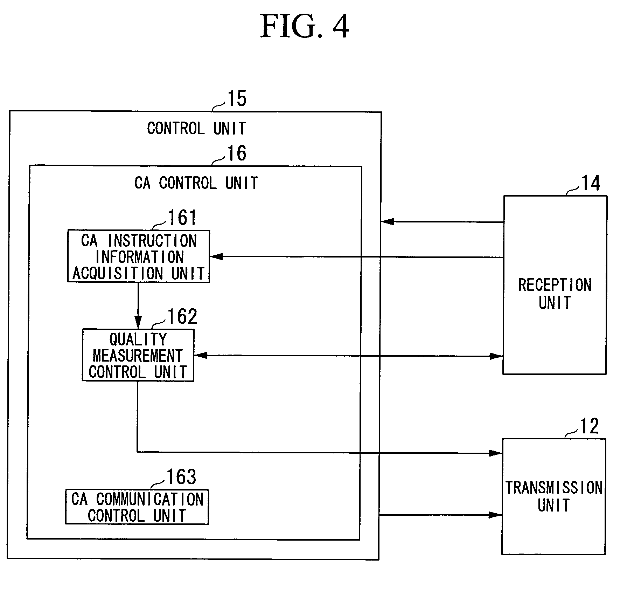

FIG. 4 is a schematic block diagram showing a configuration of the control unit 15 of the terminal station apparatus 10. The control unit 15 of the terminal station apparatus 10 includes a CA control unit 16. Further, the CA control unit 16 includes a CA instruction information acquisition unit 161, a quality measurement control unit 162, and a CA communication control unit 163.
The CA instruction information acquisition unit 161 acquires CA instruction information from DL control information received by the reception unit 14 along with DL user data. The CA instruction information is notified to the quality measurement control unit 162.

The quality measurement control unit 162 (also referred to as a quality measurement unit) measures radio qualities of a plurality of CCs as instructed by the CA/early communication/quality measurement determination unit 262 of the base station apparatus 20 by notifying the reception unit 14 of quality measurement control information on the basis of the CA instruction information notified from the CA instruction information acquisition unit 161. According to an instruction by the quality measurement control information, the reception unit 14 measures radio quality using a reference signal, which is a known signal among CCs, and outputs a result of the measurement to the quality measurement control unit 162. The quality measurement control unit 162 outputs the quality measurement result received from the reception unit 14 as UL control information to the transmission unit 12, thereby transmitting the UL control information, that is, the measured radio quality, to the base station apparatus 20 along with UL user data.
The CA communication control unit 163 controls the CA instruction information acquisition unit 161, the quality measurement control unit 162, the reception unit 14, and the transmission unit 12, and controls CA communication.

### <Operation Sequence Example A>

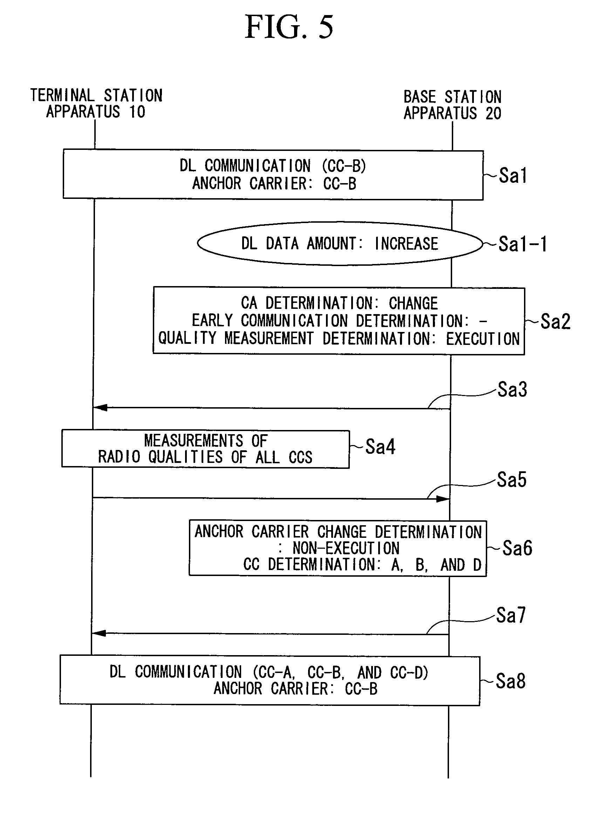

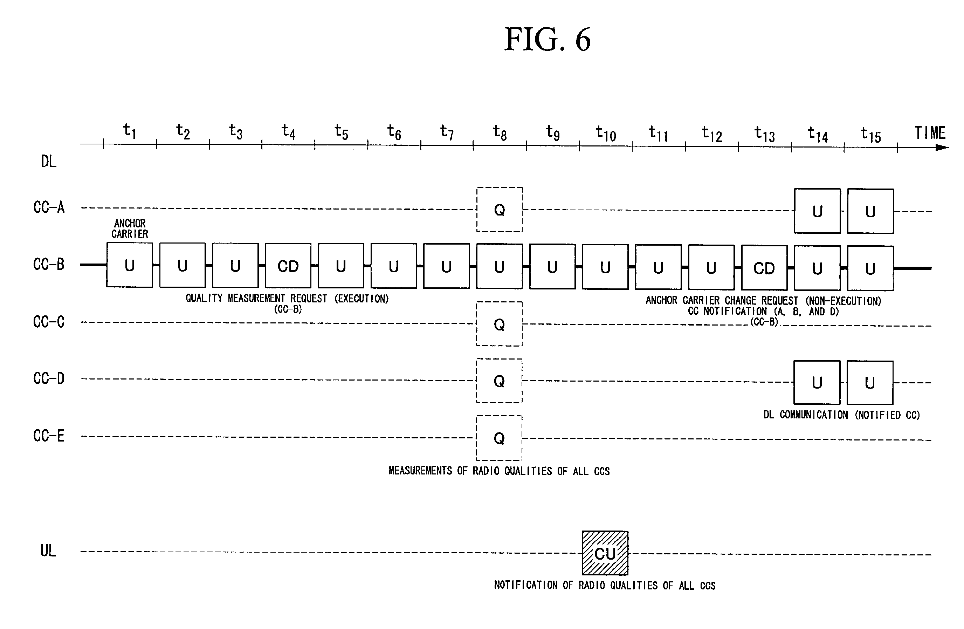

FIG. 5 is a sequence diagram showing the operation sequence example A between the terminal station apparatus 10 and the base station apparatus 20 according to this embodiment. FIG. 6 is a diagram showing an image of CCs to be used in the operation sequence example A. In FIG. 6, the horizontal axis is a time axis. In addition, DL CC-A to CC-E and information to be transmitted in UL are shown in FIG. 6. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example A, the terminal station apparatus 10 has already performed DL communication with the base station apparatus 20 using CC-B, which is the anchor carrier (Sa1 of FIG. 5 and t1 to t3 of FIG. 6).
In this step, because an amount of communicated data is small or data has not been generated, communication by only one CC (CC-B) is performed and power consumption is reduced.

In addition, the terminal station apparatus 10 performs pre-acquisition by acquiring band information (a center frequency and a bandwidth) regarding CCs (here CC-A to CC-E) serving as CA candidates during a communication connection and is in a state in which synchronization with the CCs is acquired. The synchronization may be acquired when the quality of each CC is measured or when communication with each CC is generated.

The DL data amount/QoS acquisition unit 261 provided in the CA control unit 26 acquires a DL data amount and QoS from DL user data and DL control information received from the CN reception unit 28. The DL data amount and the QoS are transmitted to the CA/early communication/quality measurement determination unit 262, and used for a determination (CA determination) of whether or not to execute CA.
In addition, the CA/early communication/quality measurement determination unit 262 also performs a determination (quality measurement determination) of whether or not to execute a measurement of radio quality of each CC and a determination (early communication determination) of whether or not to execute early communication between the terminal station apparatus 10 and the base station apparatus 20.

Here, if the DL data amount has been increased (Sa1-1), the base station apparatus 20 changes a CC to be used for transmission of DL user data directed to the terminal station apparatus 10. Specifically, if the DL data amount/QoS acquisition unit 261 of the base station apparatus 20 senses variation of the DL data amount, the CA/early communication/quality measurement determination unit 262 makes a CA determination and a quality measurement determination (Sa2). In this operation sequence example, it is determined that CA is executed and the radio quality measurement is performed.

In this case, the CA/early communication/quality measurement determination unit 262 of the base station apparatus 20 outputs a quality measurement request (execution), which is a request for causing the terminal station apparatus 10 to measure the radio quality of each CC, to the MS transmission unit 22, so that transmission is performed using CC-B (Sa3 and t4). At this time, information necessary for a radio quality measurement of CC-A to CC-E serving as CA candidates may also be notified to the terminal station apparatus 10. A CC serving as a target of the radio quality measurement may be designated by the quality measurement request.

Next, according to the radio quality measurement request (execution) received from the base station apparatus 20, the quality measurement control unit 162 of the terminal station apparatus 10 starts monitoring each notified CC, and controls the reception unit 14 to start a measurement of radio quality (Sa4 and t8).
Here, the reception unit 14 measures received power of a reference signal of each CC, and calculates a quality measurement result indicating radio quality such as a channel quality indicator (CQI) from a measurement value.
In addition, at this time, the reception unit 14 also establishes synchronization by detecting a symbol timing, for example, on the basis of the received reference signal, if synchronization with a CC of which radio quality is measured is not acquired, and receiving a synchronization channel (SCH) and a broadcast channel (BCH) if synchronization is completely deviated.
The quality measurement control unit 162 outputs the quality measurement result indicating the radio quality measured by the reception unit 14 as UL control information to the transmission unit 12, so that the quality measurement result is transmitted to the base station apparatus 20 (Sa5 and t10).

The radio quality acquisition unit 263 provided in the control unit 25 of the base station apparatus 20 acquires the radio quality of each CC notified from the terminal station apparatus 10, and notifies the anchor C/CC determination unit 264 of the radio quality. The anchor C/CC determination unit 264 makes an anchor carrier change determination, which is a determination of whether or not an anchor carrier change is necessary, on the basis of the radio quality and the DL data amount and the QoS received from the DL data amount/QoS acquisition unit 261 and determines the anchor carrier if necessary. In addition, a CC determination, which is a determination of CCs to be used for CA communication, is also made (Sa6). Although not shown in FIGS. 5 and 6, a determination of whether or not to execute CA may be made again here.

In this operation sequence example, it is determined that CA communication is performed by CC-A, CC-B, and CC-D without changing an anchor carrier.
In the selection of CCs to be used for the CA communication, for example, the selection may be made in sequence from a CC having good radio quality, or the selection may be made in sequence from a CC allocated to a small number of terminal station apparatuses 10 among CCs having radio quality that is greater than a predetermined value.

The anchor C/CC determination unit 264 outputs an anchor carrier change request (non-execution) indicating that the anchor carrier is not changed and a CC notification (CC-A, CC-B, and CC-D) for notifying of CCs to be used for CA to the MS transmission unit 22, so that the anchor carrier change request and the CC notification (CC-A, CC-B, and CC-D) are notified to the terminal station apparatus 10 using the anchor carrier (here, CC-B) (Sa7 and t13).
The terminal station apparatus 10 receiving the anchor carrier change request (non-execution) and the CC notification (CC-A, CC-B, and CC-D) is in a state in which DL communication (reception) by CA of only the notified CC-A, CC-B, and CC-D can be initiated. That is, the reception of CC-C and CC-E by the reception unit 14 is in a stopped state.

Subsequently (or simultaneously), the control unit 25 of the base station apparatus 20 outputs the DL user data and the DL control information received by the CN reception unit 28 from the CN 30 to the MS transmission unit 22, so that transmission is performed using CC-A, CC-B, and CC-D previously determined by the anchor C/CC determination unit 264.
Thereby, DL communication is initiated by aggregation of CC-A, CC-B, and CC-D (Sa8 and t14).

Here, after a state in which reception is possible in CCs notified by the CC notification from the base station apparatus 20 is reached, the terminal station apparatus 10 may notify the base station apparatus 20 of the fact that the reception is possible, and then the base station apparatus 20 receiving the notification may initiate DL transmission.
As described above, when the CA/early communication/quality measurement determination unit 262 determines some of CCs for which a radio quality measurement instruction is generated as CCs in which the DL user data is transmitted, the anchor C/CC determination unit 264 notifies the terminal station apparatus 10 of the CCs, and the reception unit 14 of the terminal station apparatus 10 performs reception in only the notified CCs. Thus, when CA by only some CCs is performed, power consumption can be reduced by stopping an RF front-end unit corresponding to an unused CC among RF front-end units provided in the reception unit 14 of the terminal station apparatus 10.

### <Operation Sequence Example B>

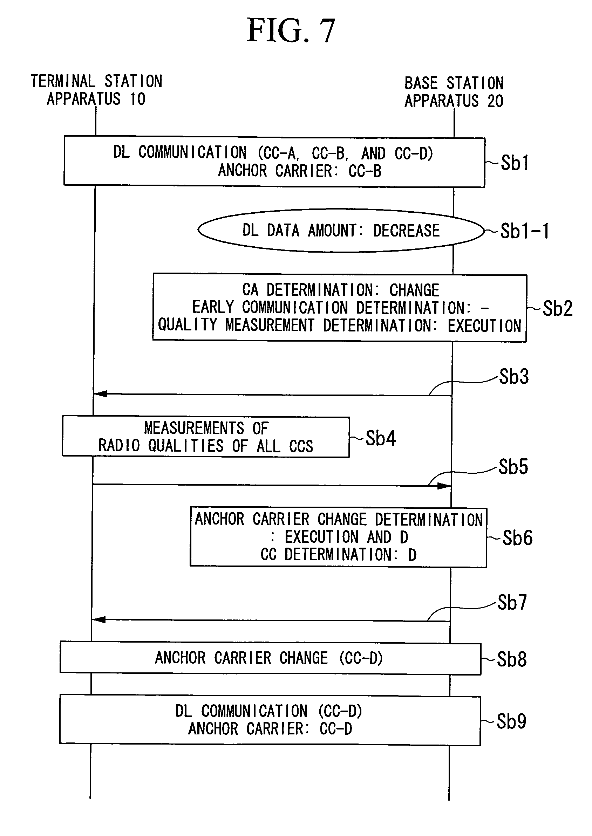

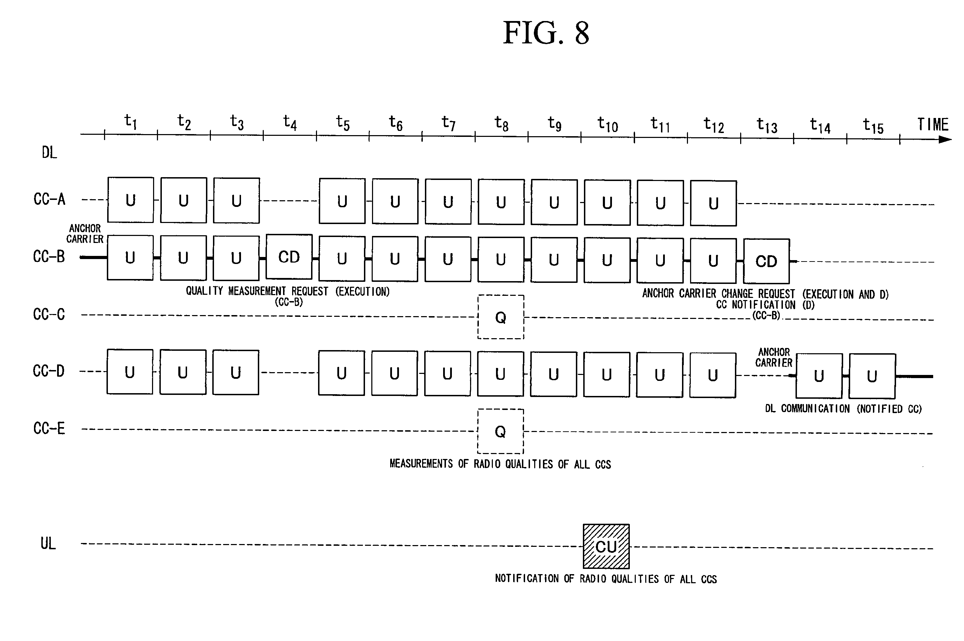

FIG. 7 is a sequence diagram showing the operation sequence example B between the terminal station apparatus 10 and the base station apparatus 20 according to this embodiment. FIG. 8 is a diagram showing an image of CCs to be used in the operation sequence example B. In FIG. 8, the horizontal axis is a time axis. In addition, DL CC-A to CC-E and information to be transmitted in UL are shown in FIG. 8. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example B, the terminal station apparatus 10 has already performed DL CA communication with the base station apparatus 20 using CC-B, which is the anchor carrier, and CC-A and CC-D (Sb1 of FIG. 7 and t1 to t3 of FIG. 8). Here, if a DL data amount has been decreased (Sb1-1), the CA/early communication/quality measurement determination unit 262 makes a CA determination and a quality measurement determination when the DL data amount/QoS acquisition unit 261 of the base station apparatus 20 senses variation of the DL data amount (Sb2). In this operation sequence example, it is determined that CA communication by a plurality of CCs is continued and a quality measurement determination for determining CCs to be used is made.

At this time, the base station apparatus 20 transmits CA instruction information including a quality measurement request (execution) to the terminal station apparatus 10 using an anchor carrier (CC-B) (Sb3 and t4). The terminal station apparatus 10 performs a radio quality measurement of a notified CC (Sb4 and t8) and notifies the base station apparatus 20 of a result of the measurement (Sb5 and t10). The anchor C/CC determination unit 264 of the base station apparatus 20 makes an anchor carrier change determination and a CC determination on the basis of a DL data amount and QoS in addition to radio quality of each CC notified from the terminal station apparatus 10 (Sb6). In this operation sequence example, it is determined that switching to communication using only CC-D is performed. In this case, the anchor carrier is also changed to CC-D. As an anchor carrier change request and a CC notification indicating the determined CC-D, determined information is notified to the terminal station apparatus 10 by the base station apparatus 20 using the currently used CC-B (Sb7 and t13). Thereafter, an anchor carrier change is made between the terminal station apparatus 10 and the base station apparatus 20 (Sb8), and DL communication using CC-D is initiated (Sb9 and t14).

### <Operation Sequence Example C>

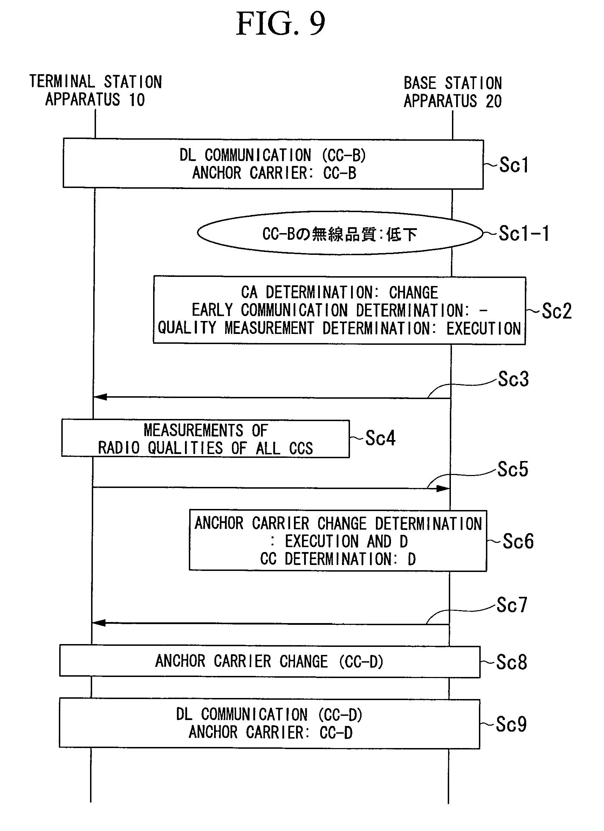

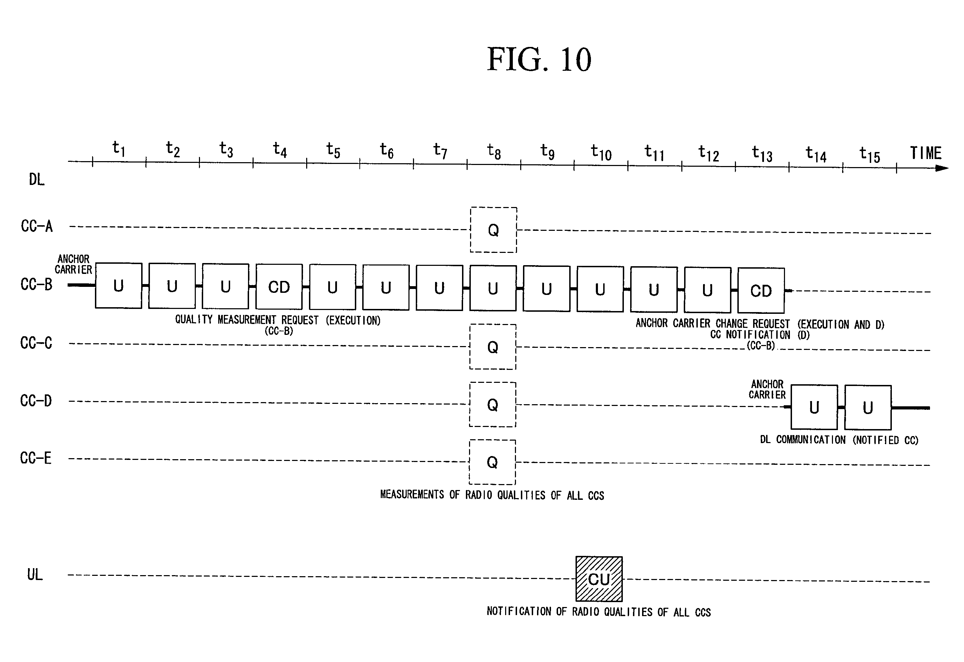

FIG. 9 is a sequence diagram showing the operation sequence example C between the terminal station apparatus 10 and the base station apparatus 20 according to this embodiment. FIG. 10 is a diagram showing an image of CCs to be used in the operation sequence example C. In FIG. 10, the horizontal axis is a time axis. In addition, DL CCs A to E and information to be transmitted in UL are shown in FIG. 10. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example C, the terminal station apparatus 10 has already performed DL communication using CC-B (Sc1 of FIG. 9 and t1 to t3 of FIG. 10). In addition, an anchor carrier is CC-B. Here, if radio quality of CC-B has been degraded (Sc1-1), the radio quality acquisition unit 263 of the base station apparatus 20 detects the degradation of the radio quality. The CA/early communication/quality measurement determination unit 262 is notified of the degradation of the radio quality, and the CA/early communication/quality measurement determination unit 262 receiving the notification makes a CA determination and a quality measurement determination (Sc2). In this operation sequence example, it is determined that both of CC and radio quality measurements are executed.

At this time, the base station apparatus 20 notifies the terminal station apparatus 10 of a quality measurement request (execution) (Sc3 and t4). The terminal station apparatus 10 measures the radio quality of each CC (Sc4), and notifies the base station apparatus 20 of a measurement result (Sc5 and t10). The base station apparatus 20 makes an anchor carrier change determination and a CC determination based on a DL data amount and QoS in addition to the radio quality of each CC notified from the terminal station apparatus 10 (Sc6). In this operation sequence example, it is determined that switching to communication using only CC-D is performed.

In this case, because the anchor carrier also becomes CC-D, the base station apparatus 20 notifies the terminal station apparatus 10 of an anchor carrier change request and a CC notification (CC-D) indicating the determined CC-D using an anchor carrier (Sc7 and t13). Thereafter, the anchor carrier between the terminal station apparatus 10 and the base station apparatus 20 is changed to CC-D (Sc8), and the DL communication using CC-D is initiated (Sc9 and t14).

### <Operation Sequence Example D>

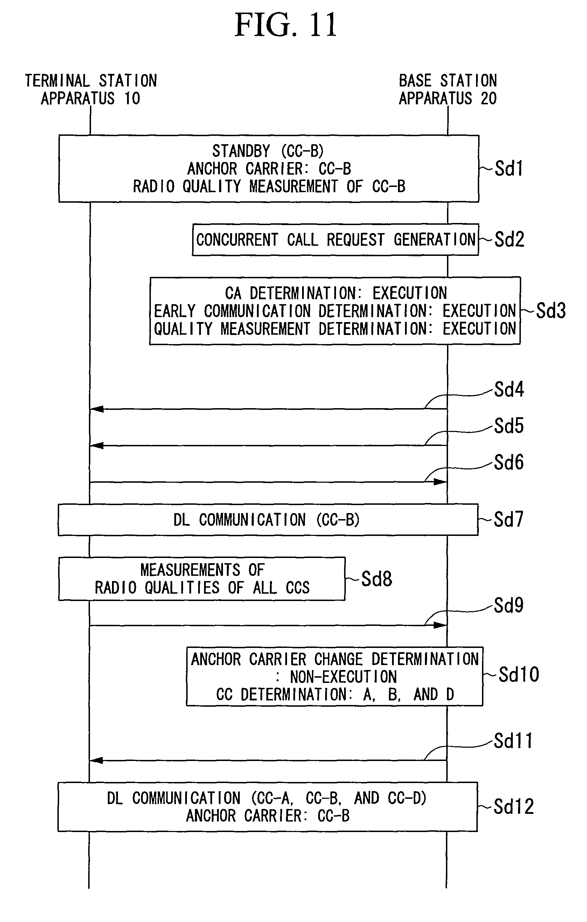

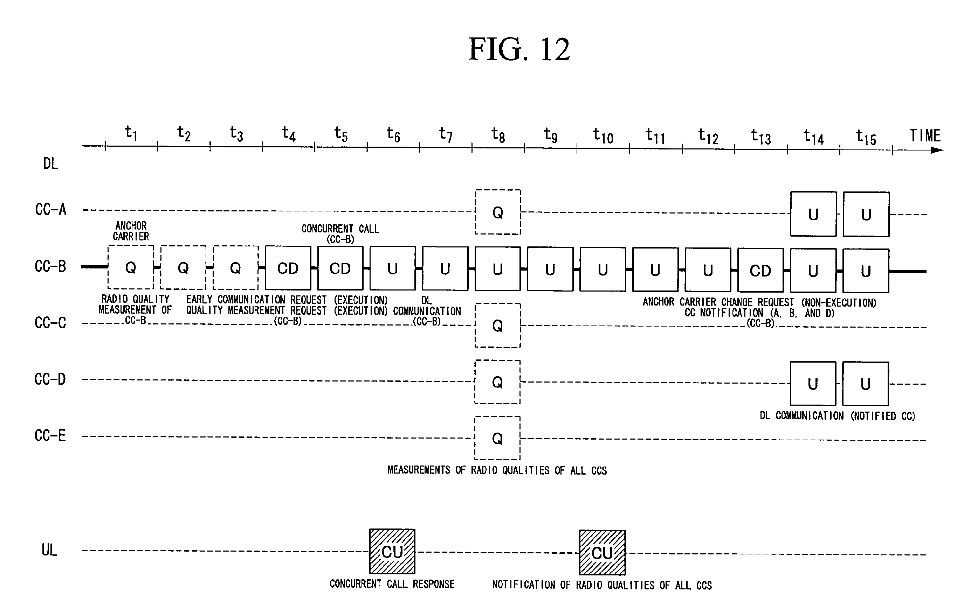

FIG. 11 is a sequence diagram showing the operation sequence example D between the terminal station apparatus 10 and the base station apparatus 20 according to this embodiment. FIG. 12 is a diagram showing an image of CCs to be used in the operation sequence example D. In FIG. 12, the horizontal axis is a time axis. In addition, DL CC-A to CC-E and information to be transmitted in UL are shown in FIG. 12. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example D, the terminal station apparatus 10 camps on CC-B. That is, CC-B is an anchor carrier for the terminal station apparatus 10 (or a carrier serving as a base for the terminal station apparatus 10). The terminal station apparatus 10 is in a standby state in CC-B, and the quality measurement control unit 162 of the terminal station apparatus 10 periodically measures radio quality of CC-B, that is, an anchor carrier (Sd1 of FIG. 11 and t1 to t2 of FIG. 12). As a measurement of radio quality, for example, a measurement of received power of a reference signal of CC-B or the like is considered. In addition, the terminal station apparatus 10 performs pre-acquisition by acquiring band information (a center frequency and a bandwidth) regarding CCs (here, CC-A to CC-E) serving as CA candidates during a communication connection and is in a state in which synchronization with the CCs is acquired, or acquires synchronization when qualities of the CCs are measured or when communication with the CCs is generated.

If DL communication (a concurrent call request) addressed to the terminal station apparatus 10 is generated in the CN 30 (Sd2), the CN reception unit 28 of the base station apparatus 20 receives DL user data and DL control information of the communication. The DL data amount/QoS acquisition unit 261 provided in the CA control unit 26 acquires a DL data amount and QoS from the DL user data and the DL control information received from the CN reception unit 28. The DL data amount and the QoS are transmitted to the CA/early communication/quality measurement determination unit 262, and a determination of whether or not to execute CA (or a CA determination) is made. In addition, the CA/early communication/quality measurement determination unit 262 also makes a determination (early communication determination) of whether or not to execute early communication between the terminal station apparatus 10 and the base station apparatus 20 and a determination (quality measurement determination) of whether or not to execute a measurement of radio quality of each CC (Sd3). In this operation sequence example, it is determined that CA is executed, early communication is executed using an anchor carrier (CC-B) between the terminal station apparatus 10 and the base station apparatus 20, and a measurement of radio quality of each CC is executed.

In this case, the CA/early communication/quality measurement determination unit 262 of the base station apparatus 20 outputs an early notification execution request (execution), which is a request for causing the terminal station apparatus 10 to execute early communication, and a quality measurement request (execution), which is a request for causing radio quality of each CC to be measured, to the MS transmission unit 22, so that transmission is performed using an anchor carrier (CC-B) (Sd4 and t4). At this time, information necessary for radio quality measurements of CC-A to CC-E serving as CA candidates is also notified to the terminal station apparatus 10. The control unit 25 of the base station apparatus 20 receives a concurrent call request of sequence Sd2 and outputs a concurrent call to the MS transmission unit 22, so that the concurrent call is transmitted using the anchor carrier (CC-B) (Sd5 and t5).

The terminal station apparatus 10 receiving the early communication request (execution) and the concurrent call returns a concurrent call response to the base station apparatus 20 (Sd6 and t6), and DL communication using CC-B is initiated between the terminal station apparatus 10 and the base station apparatus 20 (Sd7 and t6). That is, when starting transmission of DL user data to the terminal station apparatus 10, the MS transmission unit 22 of the base station apparatus 20 starts transmission of DL user data and DL control information using only CC-B, which is the anchor carrier, before radio quality of each CC is acquired in sequence Sd9 to be described later as a response to an instruction by the CA/early communication/quality measurement determination unit 262. The terminal station apparatus 10 monitors only CC-B, which is the anchor carrier, and receives the DL user data and the DL control information transmitted by the base station apparatus 20.

Here, if a DL data amount, QoS, and the like are not received and measured at the time of sequence Sd3, only the concurrent call may be transmitted to the terminal station apparatus 10 (Sd5). Thereafter, the terminal station apparatus 10 may make a concurrent call response (Sd6). After DL communication (CC-B) has been initiated, the CA determination, the early communication determination, and the quality measurement determination (Sd3) and the transmission of the early communication request and the quality measurement request from the base station apparatus 20 to the terminal station apparatus 10 (Sd4 and t4) may be performed. As in the operation sequence example A, this case becomes an operation sequence during a connection, and the early communication determination and the transmission of the early communication request are not performed.

Next, according to the radio quality measurement request (execution) received from the base station apparatus 20 in sequence Sd4, the quality measurement control unit 162 of the terminal station apparatus 10 starts monitoring of CC-A to CC-E (a radio quality measurement of CC-B is periodically performed), and controls the reception unit 14 to start the radio quality measurement (Sd8 and t8). Here, received power of a reference signal of each CC is measured and a quality measurement result indicating radio quality such as a CQI from a measurement value is calculated.
In addition, here, synchronization is established if synchronization with a CC of which radio quality is measured is not acquired.
The quality measurement control unit 162 outputs the radio quality measurement result indicating radio quality measured by the reception unit 14 to the transmission unit 12 as UL control information, so that the UL control information is transmitted to the base station apparatus 20 (Sd9 and t10).

The radio quality acquisition unit 263 provided in the control unit 25 of the base station apparatus 20 acquires radio quality of each CC notified from the terminal station apparatus 10, and notifies the anchor C/CC determination unit 264 of the radio quality. The anchor C/CC determination unit 264 makes an anchor change determination, which is a determination of whether or not an anchor carrier change is necessary, on the basis of the radio quality, and the DL data amount and the QoS received from the DL data amount/QoS acquisition unit 261, and determines the anchor carrier if necessary (Sd10). In addition, a CC determination, which is a determination of CCs to be used for CA communication, is also made. Although not shown in FIGS. 11 and 12, here, a determination of whether or not to execute CA may be made again.

Here, in sequence Sd10, the anchor C/CC determination unit 264 of the base station apparatus 20 selects CC-A, CC-B, and CC-D as CCs to be used for CA without changing the anchor carrier. For example, the selection may be made in sequence from a CC having good radio quality, or the selection may be made in sequence from a CC allocated to a small number of terminal station apparatuses 10 among CCs having radio quality that is greater than a predetermined value. The anchor C/CC determination unit 264 outputs an anchor carrier change request (non-execution) indicating that the anchor carrier is not changed and a CC notification (CC-A, CC-B, and CC-D) for notifying of CCs to be used for CA to the MS transmission unit 22, so that they are notified to the terminal station apparatus 10 using the anchor carrier (Sd11 and t13).

The terminal station apparatus 10 receiving the anchor carrier change request (non-execution) and the CC notification (CC-A, CC-B, and CC-D) of sequence Sd11 is in a state in which DL communication (reception) by CA of only the notified CC-A, CC-B, and CC-C can be initiated.
Subsequently (or simultaneously), the control unit 25 of the base station apparatus 20 outputs the DL user data and the DL control information received by the CN reception unit 28 from the CN 30 to the MS transmission unit 22, so that transmission is performed using CC-A, CC-B, and CC-D previously determined by the anchor C/CC determination unit 264.

Thereby, the DL communication by CA of CC-A, CC-B, and CC-D is initiated (Sd12 and t14).
Here, after a state in which reception is possible in CCs notified by the CC notification from the base station apparatus 20 is reached, the terminal station apparatus 10 may notify the base station apparatus 20 of the fact that the reception is possible, and then the base station apparatus 20 receiving the notification may start DL transmission.

As described above, when the CA/early communication/quality measurement determination unit 262 determines some of CCs for which a radio quality measurement instruction is made as CCs in which the DL user data is transmitted (Sd10), the anchor C/CC determination unit 264 notifies the terminal station apparatus 10 of the CCs (Sd11), and the reception unit 14 of the terminal station apparatus 10 performs reception only in the notified CCs (Sd12). Thus, when CA by only some CCs is performed, power consumption can be reduced by stopping an RF front-end unit corresponding to an unused CC among RF front-end units provided in the reception unit 14 of the terminal station apparatus 10.

### <Operation Sequence Example E>

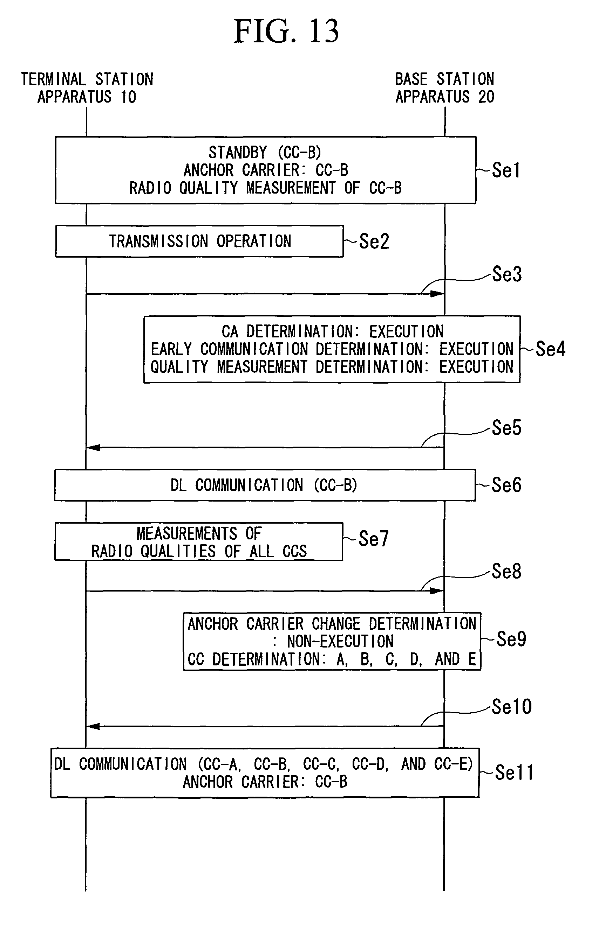

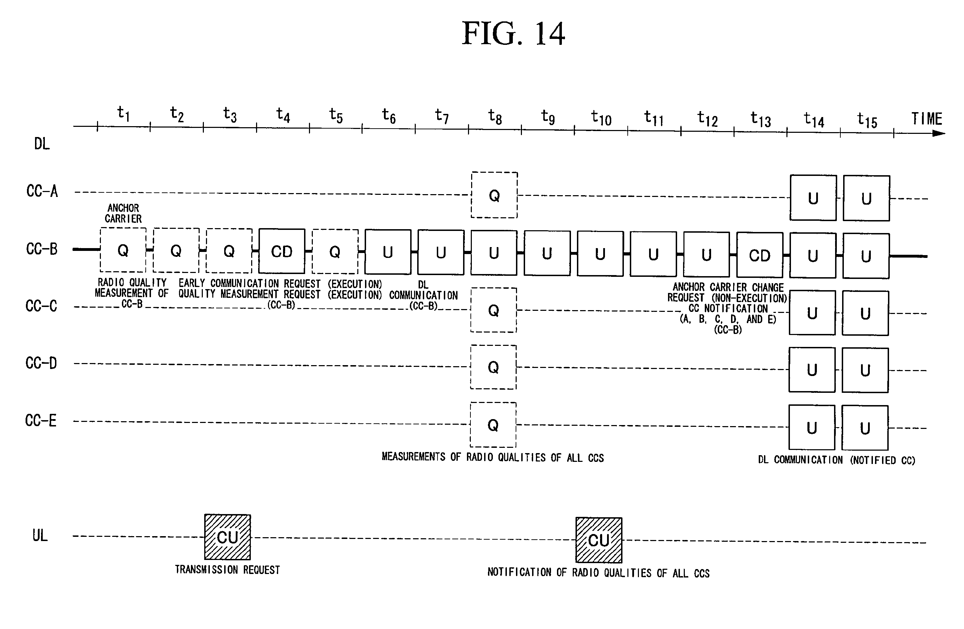

FIG. 13 is a sequence diagram showing the operation sequence example E between the terminal station apparatus 10 and the base station apparatus 20 according to this embodiment. FIG. 14 is a diagram showing an image of CCs to be used in the operation sequence example E. In FIG. 14, the horizontal axis is a time axis. In addition, DL CC-A to CC-E and information to be transmitted in UL are shown in FIG. 14. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example E, the terminal station apparatus 10 also camps on CC-B. The terminal station apparatus 10 is in a standby state in CC-B, and performs a measurement of radio quality of CC-B (Se1 of FIG. 13 and t1 to t2 of FIG. 14). If a transmission request is generated by a user's transmission operation (Se2) in the terminal station apparatus 10, the terminal station apparatus 10 notifies the base station apparatus 20 of the transmission request (Se3 and t3). If DL communication with the terminal station apparatus 10 is generated in the base station apparatus 20 as a result of the transmission request, the CA/early communication/quality measurement determination unit 262 of the base station apparatus 20 makes a CA determination, an early communication determination, and a quality measurement determination.

In the operation sequence example E, it is determined that CA is executed and early communication is executed using CC-B between the terminal station apparatus 10 and the base station apparatus 20 by these determinations (Se4). At this time, the base station apparatus 20 transmits an early communication request (execution) and a quality measurement request (execution) to the terminal station apparatus 10 using CC-B (Se5 and t4). Upon receipt of the early communication request (execution), the terminal station apparatus 10 initiates DL communication (reception) using CC-B between the terminal station apparatus 10 and the base station apparatus 20 (Se6 and t6).
Here, if a DL data amount, QoS, and the like are not received or measured at the time of Se4, a CA determination, an early communication determination, a quality measurement determination (Se4) and the transmission of the early communication request and the quality measurement request from the base station apparatus to the mobile station apparatus (Se5) may be performed after the DL communication (CC-B) is initiated (Se6). This case is an operation sequence during a connection (connected state), and the early communication determination and the transmission of the early communication request are not performed.

Next, the terminal station apparatus 10 measures radio quality of a CC designated by the quality measurement request (execution) notified from the base station apparatus 20 (Se7), and transmits the measured radio quality to the base station apparatus 20 (Se8 and t10). The anchor C/CC determination unit 264 of the base station apparatus 20 determines the anchor carrier change and selects CCs to be used for CA on the basis of a DL communication volume and QoS in addition to radio quality of each CC notified from the terminal station apparatus 10 (Se9). In this operation sequence example, CC-A, CC-B, CC-C, CC-D, and CC-E are selected as CCs of which CA is performed without changing the anchor carrier.

The anchor C/CC determination unit 264 outputs these determination results to the MS transmission unit 22, so that the determination results are notified to the terminal station apparatus 10 using CC-B as the anchor carrier change request (non-execution) and the CC notification (A, B, C, D, and E) (Se10 and t13). Subsequently, the control unit 25 of the base station apparatus 20 outputs DL user data and DL control information received by the CN reception unit 28 from the CN 30 to the MS transmission unit 22, so that transmission is performed using CC-A, CC-B, CC-C, CC-D, and CC-E previously determined by the anchor C/CC determination unit 264. The terminal station apparatus 10 receiving the anchor carrier change request (non-execution) and the CC notification (CC-A, CC-B, CC-C, CC-D, and CC-E) of sequence Se1 initiates DL communication (reception) by CA of CC-A, CC-B, CC-C, CC-D, and CC-E (Se11 and t14).

### <Operation Sequence Example F>

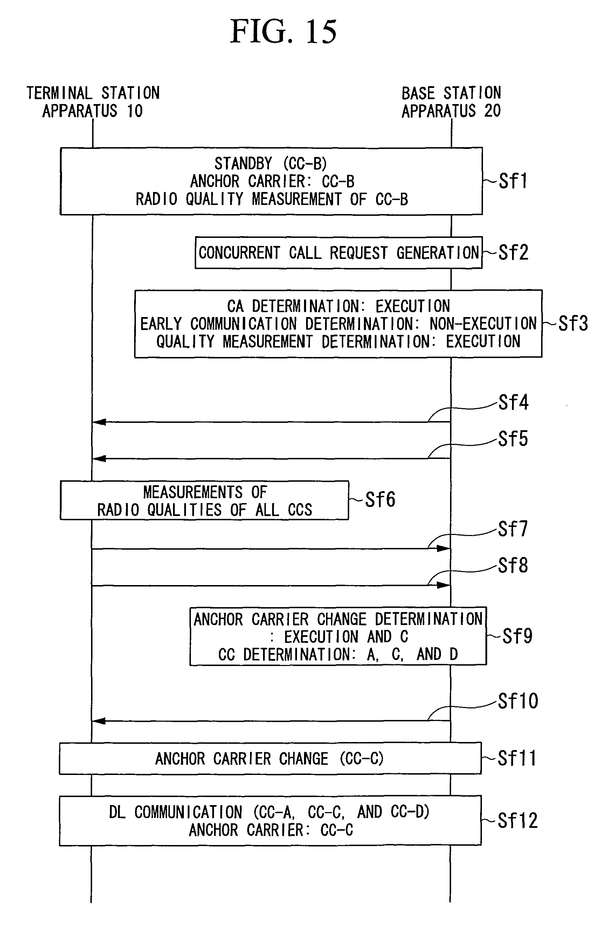

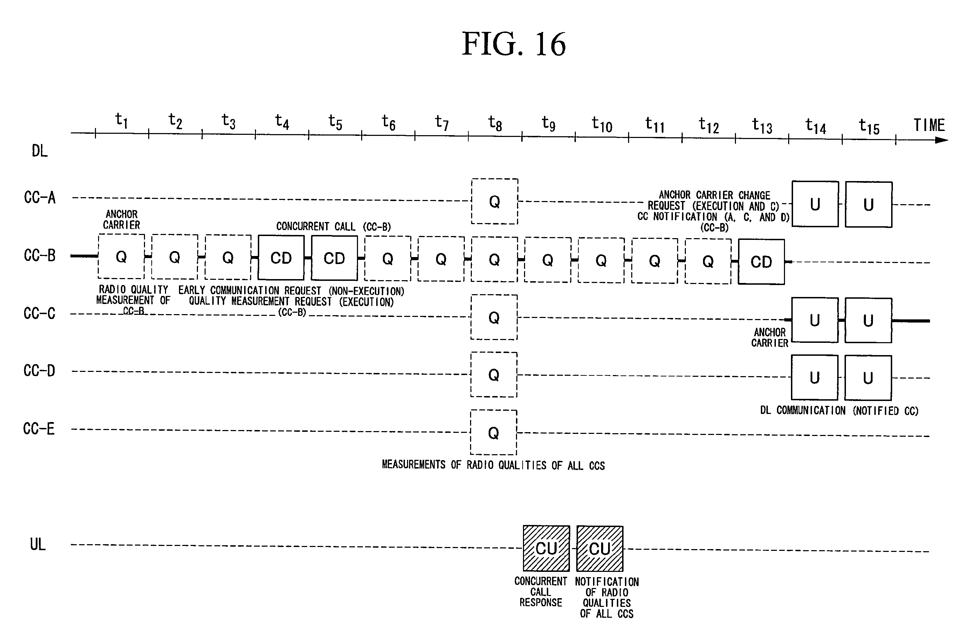

FIG. 15 is a sequence diagram showing the operation sequence example F between the terminal station apparatus 10 and the base station apparatus 20 according to this embodiment. FIG. 16 is a diagram showing an image of CCs to be used in the operation sequence example F. In FIG. 16, the horizontal axis is a time axis. In addition, DL CC-A to CC-E and information to be transmitted in UL are shown in FIG. 16. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example F, the terminal station apparatus 10 also camps on CC-B as in step Sd1 of the operation sequence example D. The terminal station apparatus 10 is in a standby state in CC-B, and measures radio quality of CC-B (Sf1 of FIG. 15 and t1 to t2 of FIG. 16). In addition, if DL communication (a concurrent call request) addressed to the terminal station apparatus 10 is generated as in sequences Sd2 and Sd3, the CA/early communication/quality measurement determination unit 262 of the base station apparatus 20 makes a CA determination, an early communication determination, and a quality measurement determination from a DL communication volume and QoS (Sf3).

However, unlike sequence Sd3, in this operation sequence example, it is determined that CA is executed by these determination processes, and a quality measurement is executed without performing early communication using CC-B between the terminal station apparatus 10 and the base station apparatus 20. At this time, the base station apparatus 20 transmits CA instruction information including an early communication request (non-execution) indicating that early communication is not executed and a quality measurement request (execution) to the terminal station apparatus 10 using CC-B (Sf4 and t4), and also transmits a concurrent call (Sf5 and t5).

According to the quality measurement request (execution) before a concurrent call response is returned to the base station apparatus 20, the terminal station apparatus 10 receiving the early communication request (non-execution) measures radio qualities of CC-A to CC-E notified from the base station apparatus 20 (Sf6). The terminal station apparatus 10 transmits a concurrent call response and the radio qualities to the base station apparatus 20 (Sf7 and t9) and (Sf8 and t10). The anchor C/CC determination unit 264 of the base station apparatus 20 makes an anchor carrier change determination and a CC determination based on a DL communication volume and QoS in addition to radio quality of each CC notified from the terminal station apparatus 10 (Sf9). In this operation sequence example, it is determined that an anchor carrier change is made and CC-C is an anchor carrier. In addition, CC-A, CC-C, and CC-D are selected as CCs of which CA is performed.

The base station apparatus 20 transmits these determination results to the terminal station apparatus 10 using an anchor carrier CC-B before a change (Sf10 and t13). Thereafter, the anchor carrier is changed between the terminal station apparatus 10 and the base station apparatus 20 and CC-C becomes the anchor carrier (Sf11), and DL CA communication using CC-A, CC-C, and CC-D is initiated (Sf12 and t14).

As described above, when the CA/early communication/quality measurement determination unit 262 determines some of CCs for which a radio quality measurement instruction is made as CCs in which the DL user data is transmitted (Sf9), the anchor C/CC determination unit 264 notifies the terminal station apparatus 10 of the CCs (Sf10), and the reception unit 14 of the terminal station apparatus 10 performs reception only in the notified CCs (Sf12). On the other hand, when one of a plurality of CCs is selected on the basis of radio quality reported from the terminal station apparatus 10 and designated as the anchor carrier, and the CC designated as the anchor carrier by the selection is changed (Sf9), the anchor C/CC determination unit 264 notifies of the CC designated as the anchor carrier along with a CC notification to the terminal station apparatus 10 (Sf10).

Because a frequency band differs according to a CC, radio quality (fading state) in the terminal apparatus 10 may significantly differ according to a CC. In the case described above, a CC having a good communication state among available CCs is also selected and used as an anchor carrier, so that it is possible to improve communication efficiency when CA is not performed.

### <Operation Sequence Example G>

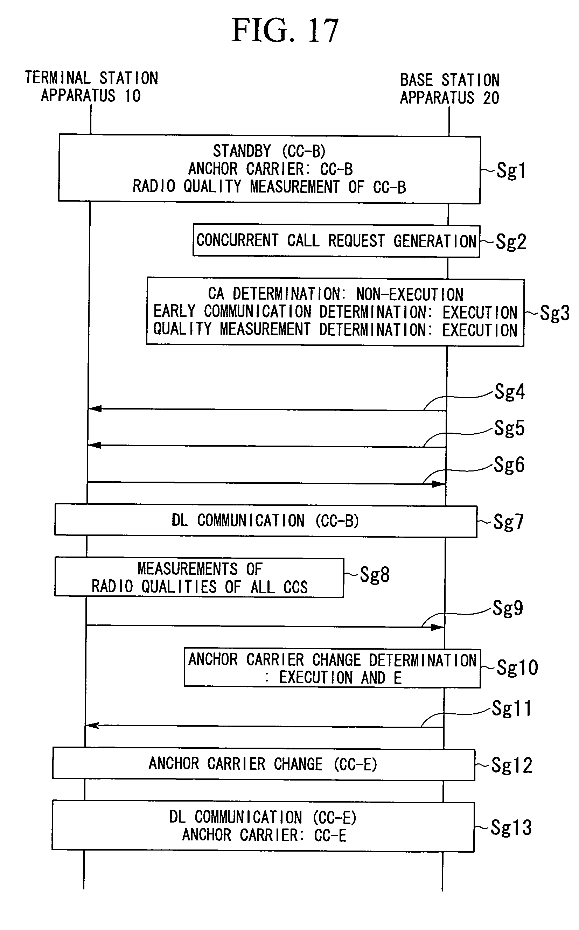

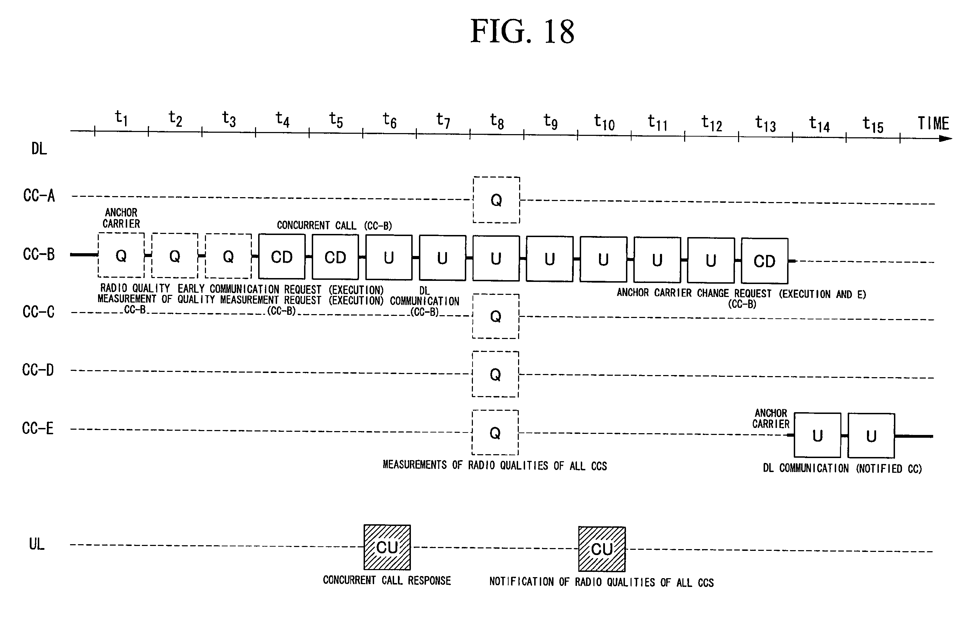

FIG. 17 is a sequence diagram showing the operation sequence example G between the terminal station apparatus 10 and the base station apparatus 20 according to this embodiment. FIG. 18 is a diagram showing an image of CCs to be used in the operation sequence example G. In FIG. 18, the horizontal axis is a time axis. In addition, DL CC-A to CC-E and information to be transmitted in UL are shown in FIG. 18. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example G, the terminal station apparatus 10 also camps on CC-B, which is an anchor carrier of the terminal station apparatus 10 (Sg1 of FIG. 17 and t1 to t2 of FIG. 18). If DL communication (a concurrent call request) addressed to the terminal station apparatus 10 is generated (Sg2), the CA/early communication/quality measurement determination unit 262 of the base station apparatus 20 makes a CA determination, an early communication determination, and a quality measurement determination from a DL data amount and QoS (Sg3). In this operation sequence example, it is determined that a radio quality measurement of a CC is executed in order to determine whether it is necessary to change an anchor carrier in the non-execution of CA. In addition, the execution of early communication is also determined.

At this time, the base station apparatus 20 notifies the terminal station apparatus 10 of CA instruction information including an early communication request (execution) and a quality measurement request (execution) and a concurrent call using the anchor carrier (CC-B) (Sg4 and t4) and (Sg5 and t5). The terminal station apparatus 10 receiving the early communication request (execution) and the concurrent call returns to a concurrent call response to the base station apparatus 20 (Sg6 and t6) and initializes DL communication in CC-B, which is an anchor carrier (Sg7 and t6). In addition, the terminal station apparatus 10 receiving the quality measurement request (execution) measures radio qualities of CC-A to CC-E notified from the base station apparatus 20 (Sg8 and t8), and notifies the base station apparatus 20 of the measured radio qualities of CC-A to CC-E (Sg9 and t10).

The anchor C/CC determination unit 264 of the base station apparatus 20 makes an anchor carrier change determination and a CC determination based on a DL data amount and QoS in addition to the radio qualities of the CCs notified from the terminal station apparatus 10 (Sg10). Here, the execution of an anchor carrier change is determined and CC-E is determined to be the anchor carrier. Because communication is performed using the anchor carrier during the non-execution of CA, the anchor C/CC determination unit 264 receiving an instruction of the non-execution of CA from the CA/early communication/quality measurement determination unit 262 does not perform a process of determining a CC to be used for DL communication.

The base station apparatus 20 transmits an anchor carrier change request (execution and E) indicating that the anchor carrier is changed to CC-E using the anchor carrier CC-B before the change (Sg11 and t13). According to the anchor carrier change request received from the base station apparatus 20, the terminal station apparatus 10 changes the anchor carrier from the current CC-B to CC-E (Sg12). Thereafter, the DL communication is initiated using CC-E (Sg13 and t14).

### <Operation Sequence Example H>

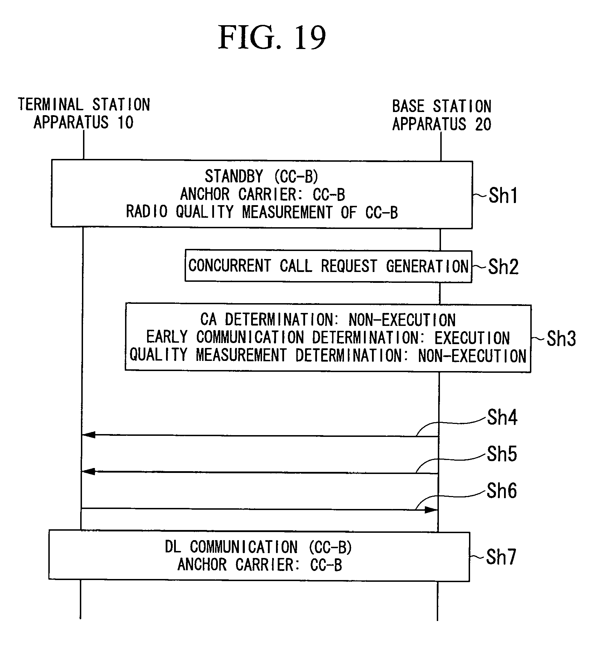

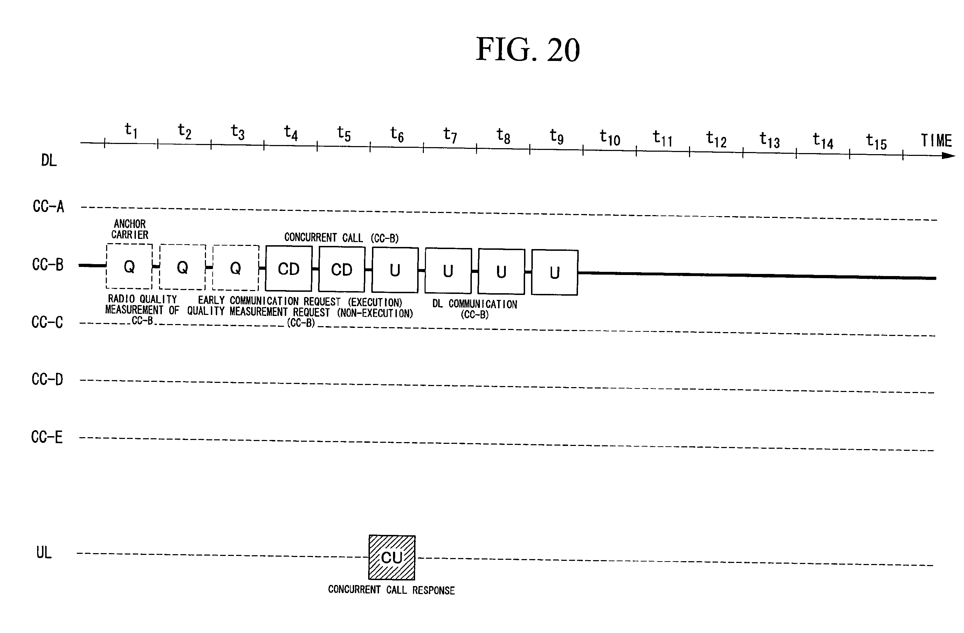

FIG. 19 is a sequence diagram showing the operation sequence example H between the terminal station apparatus 10 and the base station apparatus 20 according to this embodiment. FIG. 20 is a diagram showing an image of CCs to be used in the operation sequence example H. In FIG. 20, the horizontal axis is a time axis. In addition, DL CC-A to CC-E and information to be transmitted in UL are shown in FIG. 20. A rectangle to which a symbol U is attached indicates that user data is transmitted and a CC quality measurement is performed. A rectangle to which a symbol CD is attached indicates that control information is transmitted and a CC quality measurement is performed. A rectangle to which a symbol CU is attached indicates that control information is transmitted. A dashed-line rectangle to which a symbol Q is attached indicates that a CC quality measurement is performed.

In the operation sequence example H, the terminal station apparatus 10 also camps on CC-B (Sh1 of FIG. 19 and t1 to t2 of FIG. 20). If DL communication (a concurrent call request) addressed to the terminal station apparatus 10 is generated (Sh2), the CA/early communication/quality measurement determination unit 262 of the base station apparatus 20 makes a CA determination, an early communication determination, and a quality measurement determination from a DL data amount and QoS (Sh3). In this operation sequence example, it is determined that radio quality of a CC for determining whether it is necessary to change an anchor carrier is not checked in the non-execution of CA by these determination processes. However, it is determined that early communication is executed.

At this time, the base station apparatus 20 transmits CA instruction information including an early communication request (execution) and a quality measurement request (non-execution) (Sh4 and t4) and a concurrent call (Sh5 and t5) to the terminal station apparatus 10 using CC-B. The terminal station apparatus 10 receiving the early communication request (execution), the quality measurement request (non-execution), and the concurrent call returns a concurrent call response to the base station apparatus 20 (Sh6 and t6). The base station apparatus 20 and the terminal station apparatus 10 receiving them initiate DL communication using CC-B, which is the anchor carrier (Sh7 and t6).

As described above, the CA/early communication/quality measurement determination unit 262 determines whether or not a plurality of CCs are used for transmission of DL user data on the basis of a DL data amount and QoS, which are requirement conditions related to the transmission of the DL user data (Sh3), and does not instruct the terminal station apparatus 10 to measure radio quality when the plurality of CCs are not used (Sh4). When the CA/early communication/quality measurement determination unit 262 determines that the plurality of CCs are not used for transmission of the DL user data, the MS transmission unit 22 transmits DL user data using the anchor carrier (Sh7).

Thereby, when CA is not performed in the case where communication of a small amount of data such as voice communication is performed, the base station apparatus 20 does not generate a radio quality measurement instruction, that is, the terminal station apparatus 10 does not perform reporting of radio quality other than that of the anchor carrier, as described above. Therefore, because only an RF front-end unit corresponding to the anchor carrier starts up and RF front-end units corresponding to other CCs are stopped (a radio quality measurement is not performed either), power consumption can be reduced.
In the case of the above-described communication of the small amount of data, for example, when the radio quality of the anchor carrier is bad, a CC quality measurement may be performed and an anchor carrier change may be made.

In addition to the above-described operation sequence examples, the number of CCs of which CA is performed by the remaining battery power of the terminal station apparatus 10 may be controlled. In this case, the remaining battery power needs to be notified from the control unit 15 of the terminal station apparatus 10 to the base station apparatus 20. The anchor C/CC determination unit 264 of the base station apparatus 20 determines a CA number by the notified remaining battery power. For example, when the remaining battery capacity is less than a predetermined set value (the remaining battery power is low), a quality measurement instruction is not executed and the non-execution of the quality measurement instruction is notified to the terminal station apparatus 10, so that the terminal station apparatus 10 to which the non-execution is notified performs DL communication by only a currently used anchor carrier. Thereby, the terminal station apparatus 10 can perform communication while suppressing electric current consumption. In addition, if the remaining battery power is about a middle level, the remaining battery power may be divided into multiple steps as when the aggregation number is narrowed down to 2, and fine control such as the aggregation number being set to less than a maximum value corresponding to each step may be performed. In addition, control may be performed so that the aggregation number is set by a manual instruction by the user himself/herself. In this case, a communication speed is low, but communication with the suppression of electric current consumption is possible.

Although quality measurements of a plurality of CCs are performed simultaneously (in the same subframe) in the above-described sequence examples, they may be performed at different times.
Although a CC quality measurement is performed when an instruction is generated from the base station apparatus 20 in the above-described sequence examples, the CC quality measurement may be periodically performed. Thereby, it is not necessary to perform the quality measurement during aggregation communication, and it is possible to reduce a delay occurring at the initiation of aggregation communication.

Although a CC quality measurement is performed when an instruction is generated from the base station apparatus 20 in the above-described sequence examples, it may be performed on the initiative of the terminal station apparatus 10. Thereby, when communication from the terminal station apparatus 10 is initiated, the quality measurement can be performed and a delay at the initiation of aggregation communication can be reduced.
Although the base station apparatus 20 performs CA communication execution, early communication execution, quality measurement execution, an anchor carrier change, and a CC determination in the above-described sequence examples, the terminal station apparatus 10 may perform these or any determinations.

Although a notification of CCs to be used is sent from the base station apparatus 20 to the terminal station apparatus 10 in the above-described sequence examples, a notification of unused CCs may be sent.

Because received data is generated in bursts when CA is performed in packet communication, it is necessary to receive data in as many CCs as possible when a large amount of DL user data is generated, or when data is generated in bursts, in the terminal station apparatus 10. However, because only radio quality of an anchor carrier or only radio qualities of some CCs are measured and radio qualities of other CCs are not measured in a standby state or when DL user data is absent or small as described above, it is not necessary to receive a reference signal or the like and it is possible to suppress power consumption.

Furthermore, it is possible to further reduce power consumption by stopping RF front-end units corresponding to the other CCs. On the other hand, because the terminal station apparatus 10 measures radio quality of each CC during communication of DL user data and notifies the base station apparatus 20 of the measured radio quality as shown in sequence Sd9 of FIG. 11 or the like, the anchor C/CC determination unit 264 of the base station apparatus 20 can select a CC having good radio quality and suppress the degradation of communication efficiency.
Furthermore, when adaptive modulation for changing a coding rate or a data modulation multi-valued number according to radio quality is used, it is possible to select an appropriate coding rate and data modulation multi-valued number based on radio quality measured by the terminal station apparatus 10 and improve communication efficiency.

In addition, when the transmission of DL user data to the terminal station apparatus 10 is initiated, the MS transmission unit 22 of the base station apparatus 20 can prevent a response time from the generation of a transmission request for DL user data to the initiation of transmission from being lengthened by performing early communication in which the transmission of the DL user data and DL control information is initiated before radio quality of each CC is acquired from the terminal station apparatus 10 as a response to an instruction by the CA/early communication/quality measurement determination unit 262.

As described above, an amount of data necessary for current communication at the initiation of CA communication or at communication is measured, and the number of CCs to be used for aggregation communication is appropriately recognized on the basis of the data amount. Furthermore, CA communication is performed by setting CCs of which the number is the recognized number of CCs. Because this is different from the related art in which the number of CCs is determined on the basis of an amount of previously communicated data and then CCs are set on the basis of an amount of data necessary at the time, it is possible to more dynamically follow the variation of a data amount, leading to the effective utilization of resources and the reduction of power consumption. Because the number of CCs to be used for aggregation communication is appropriately recognized and the number of CCs to be used is set according to the recognized number, the effective utilization of resources and the reduction of power consumption are implemented.

In addition, as described above, a CC quality measurement is performed at the initiation of CA communication and CCs to be used on the basis of the quality measurement are determined. Thus, it is possible to prevent CCs having bad quality from being allocated to CA communication.

In addition, when a CC quality measurement is performed, or when synchronization with a CC is established, at the initiation of CA, the communication initiation may be delayed because of the time needed for these processes. To solve this problem, communication using an anchor carrier is initiated before CA communication is initiated. In this patent application, this is referred to as early communication, and it is possible to initiate communication without waiting for the initiation of CA communication by performing early communication during communication occurrence and prevent a delay during a communication volume increase/communication occurrence. Data reception in CCs of aggregation communication is possible by acquiring synchronization of CCs that are not yet monitored during a quality measurement.

In addition, a program for implementing functions of the control unit 25 and the control unit 15 of FIG. 2 may be recorded on a computer readable recording medium. A process of each part may be performed by enabling a computer system to read and execute the program recorded on the recording medium. Each part may be implemented by dedicated hardware. The "computer system" used herein includes an operating system (OS) and hardware, such as peripheral devices.

The "computer readable recording medium" is a portable medium such as a flexible disk, magneto-optical disc, read only memory (ROM) and compact disc-ROM (CD-ROM), and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be one for implementing part of the above functions, or the above functions may be implemented in combination with a program already recorded on the computer system.

The embodiments of the present invention have been described in detail with reference to the drawings. However, specific configurations are not limited to the embodiments and may include any design change in the scope without departing from the subject matter of the present invention.

### Industrial Applicability

The present invention is suitable for use in a mobile communication system such as a cellular system in which the terminal station apparatus 10 is a mobile station and the base station apparatus 20 is a base station, but is not limited thereto.

### Reference Symbols

10: Terminal station apparatus
11: Transmission antenna unit
12: Transmission unit
13: Reception antenna unit
14: Reception unit
15: Control unit
16: CA control unit
161: CA instruction information acquisition unit
162: Quality measurement control unit
163: CA communication control unit
20: Base station apparatus
21: Transmission antenna unit
22: MS transmission unit
23: Reception antenna unit
24: MS reception unit
25: Control unit
26: CA control unit
27: CN transmission unit
28: CN reception unit
261: DL data amount/QoS acquisition unit
262: CA/early communication/quality measurement determination unit
263: Radio quality acquisition unit
264: Anchor C/CC determination unit
265: CA communication control unit
30: Core network

## Claims

1. A wireless communication system comprising a terminal station apparatus and a base station apparatus which transmits data to the terminal station apparatus using a plurality of component carriers that are communication frequency bands in which wireless communication is performed,
wherein the base station apparatus comprises:
a frequency band determination unit which determines component carriers in which data is transmitted and notifies the terminal station apparatus of the determined component carriers on the basis of radio quality of each of the plurality of component carriers when transmission of the data to the terminal station apparatus is initiated or when the component carriers to be used for transmission of the data to the terminal station apparatus are changed; and
a transmission unit which transmits the data using the component carriers determined by the frequency band determination unit, and
wherein the terminal station apparatus comprises:
a reception unit which acquires the data transmitted by the transmission unit of the base station apparatus by receiving signals of the component carriers notified by the frequency band determination unit of the base station apparatus.

2. The wireless communication system according to claim 1, wherein the base station apparatus comprises a quality measurement instruction unit which instructs the terminal station apparatus to measure radio qualities of the plurality of component carriers when transmission of the data to the terminal station apparatus is initiated or when the component carriers to be used for transmission of the data to the terminal station apparatus are changed,
the terminal station apparatus comprises a quality measurement unit which measures the radio qualities of the plurality of component carriers for which an instruction has been generated by the quality measurement instruction unit and transmits the radio qualities to the base station apparatus, and
the frequency band determination unit determines the component carriers in which the data is transmitted on the basis of the radio quality of each of the plurality of component carriers reported from the terminal station apparatus as a response to the instruction by the quality measurement instruction unit.

3. The wireless communication system according to claim 1, wherein the frequency band determination unit determines the component carriers in which the data is transmitted on the basis of requirement conditions related to the transmission of the data in addition to the radio quality.

4. The wireless communication system according to claim 3, wherein the requirement conditions related to the transmission of the data comprise an amount of the data and service quality of the data.

5. The wireless communication system according to claim 2, wherein the quality measurement unit acquires synchronization with a signal from the base station apparatus when the radio quality is measured.

6. The wireless communication system according to claim 2, wherein the quality measurement unit of the terminal station apparatus periodically measures radio quality of an anchor carrier, which is one of the component carriers, and
the transmission unit initiates the transmission of the data using only the anchor carrier before the radio quality of each of the component carriers is acquired as a response to the instruction by the quality measurement instruction unit when the transmission of the data to the terminal station apparatus is initiated.

7. The wireless communication system according to claim 6, wherein the quality measurement instruction unit determines whether or not a plurality of component carriers for the transmission of the data are used on the basis of the requirement conditions related to the transmission of the data, and does not instruct the terminal station apparatus to measure the radio quality when the plurality of component carriers are determined not to be used, and
the transmission unit transmits the data using the anchor carrier when the quality measurement instruction unit determines that the plurality of component carriers for the transmission of the data are not used.

8. The wireless communication system according to claim 6, wherein the frequency band determination unit notifies the terminal station apparatus of component carriers when some component carriers for which a radio quality measurement instruction has been made by the quality measurement instruction unit are determined as component carriers in which the data is transmitted,
the reception unit of the terminal station apparatus performs reception in only the notified component carriers, and
the frequency band determination unit notifies of a component carrier serving as the anchor carrier along with a component carrier notification to the terminal station apparatus when one of the plurality of component carriers is selected and set as the anchor carrier on the basis of the radio quality reported from the terminal station apparatus and the component carrier serving as the anchor carrier by the selection is changed.

9. The wireless communication system according to claim 2, wherein the frequency band determination unit notifies the terminal station apparatus of the component carriers when the quality measurement instruction unit determines some component carriers for which a radio quality measurement instruction has been made as the component carriers in which the data is transmitted, and
the reception unit of the terminal station apparatus performs reception in only the notified component carriers.

10. A wireless communication method for use in a wireless communication system comprising a terminal station apparatus and a base station apparatus which transmits data to the terminal station apparatus using a plurality of component carriers that are communication frequency bands in which wireless communication is performed, the method comprising:
determining, by the base station apparatus, component carriers in which data is transmitted and notifying the terminal station apparatus of the determined component carriers on the basis of radio quality of each of the plurality of component carriers when transmission of the data to the terminal station apparatus is initiated or when the component carriers to be used for transmission of the data to the terminal station apparatus are changed;
transmitting, by the base station apparatus, the data using the determined component carriers; and
acquiring, by the terminal station apparatus, the transmitted data by receiving signals of the notified component carriers.

11. A base station apparatus which transmits data to a terminal station apparatus using a plurality of component carriers that are communication frequency bands in which wireless communication is performed, the base station apparatus comprising:
a frequency band determination unit which determines component carriers in which data is transmitted and notifies the terminal station apparatus of the determined component carriers on the basis of radio quality of each of the plurality of component carriers when transmission of the data to the terminal station apparatus is initiated or when the component carriers to be used for transmission of the data to the terminal station apparatus are changed; and
a transmission unit which transmits the data using the component carriers determined by the frequency band determination unit.

12. A terminal station apparatus which receives data transmitted by a base station apparatus using a plurality of component carriers that are continuous frequency bands, the terminal station apparatus comprising:
a reception unit which receives data transmitted by the base station apparatus by receiving signals of component carriers determined on the basis of radio quality of each of the plurality of component carriers when transmission of the data to the terminal station apparatus is initiated or when the component carriers to be used for transmission of the data to the terminal station apparatus are changed.
